# EUROPEAN PATENT APPLICATION

(11) **EP 4 521 165 A1**
(43) Date of publication of application: **12.03.2025**
(21) Application number: 24776134.9
(22) Date of filing: 19.07.2024
(51) Int. Cl.: G03B 5/06, G03B 3/10, G03B 13/36, G03B 17/12, G03B 30/00, H04N 23/57, H04N 23/90, H04N 23/55, H04M 1/02

(54) **ELECTRONIC DEVICE COMPRISING CAMERA DEVICE ARRANGED AROUND MAGNETIC BODY**

(30) Priority: 20.07.2023 KR 20230094710; 30.11.2023 KR 20230170773; 01.07.2024 KR 20240086450
(71) Applicant: Samsung Electronics Co., Ltd, Suwon-si, Gyeonggi-do 16677 (KR)
(72) Inventor: KANG, Seunggoo, Suwon-si, Gyeonggi-do 16677 (KR); PARK, Junghyung, Suwon-si, Gyeonggi-do 16677 (KR); HONG, Hyunju, Suwon-si, Gyeonggi-do 16677 (KR)
(74) Representative: Gulde & Partner
(86) International application number: PCT/KR2024/010450
(87) International publication number: WO 2025/018834

(57) **Abstract**

An electronic device according to an embodiment of the present disclosure includes a first housing, a second housing rotatably connected to the first housing based on a folding axis, and a first camera device disposed in the first housing. In one embodiment the electronic device includes a first magnet disposed in the first housing and at least partially spaced apart from the first camera device, and a second magnet disposed in the second housing and configured to at least partially face the first magnet in a folded state of the electronic device. In one embodiment, the first camera device includes a lens assembly, an AF actuator configured to at least partially face the first magnet and move the lens assembly in an optical axis direction, a first shield member disposed between the first magnet and the AF actuator and configured to cover at least a part of the AF actuator, a first OIS actuator configured to move the lens assembly in a first axis direction perpendicular to the optical axis, and a second OIS actuator configured to move the lens assembly in a second axis direction perpendicular to the first axis. Various other embodiments are possible.

## Description

### [Technical Field]

Various embodiments disclosed in the present document relate to an electronic device including a camera device disposed around a magnetic element.

### [Background Art]

As more pieces of information are displayed visually and more functions are supported by electronic devices, an increasing number of users demand displays with larger screens. New types of electronic devices are also being developed to provide displays that have large screens while maintaining sizes that make it easy to carry the electronic devices.

With advancements in display technologies, foldable displays can be implemented. Electronic devices, which utilize these displays, are also available in the form of foldable electronic devices having variable areas that may display information.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

A foldable electronic device has two housings coupled by a hinge device, such that the operation of folding or unfolding the foldable electronic device may be implemented. Magnets may be respectively disposed in the housings to maintain a state in which the foldable electronic device is completely folded. The magnets respectively disposed in the housings are disposed so that different polarities face each other in the state in which the electronic device is folded, such that an attractive force may be applied between the magnets. Therefore, the folded state of the foldable electronic device may be maintained by the magnets. As a degree to which the magnets respectively disposed in the housings corresponds to each other increases, the attractive force applied between the magnets may increase.

Various electronic components may be disposed in the electronic device. In the embodiment, the electronic components may be disposed adjacent to the magnets disposed in the housings. For example, a camera device may be disposed in the housing and provided adjacent to the magnet.

In order to obtain a clear image by means of the camera device, the electronic device may need to adjust a focal point with respect to a subject or compensate for shaking (e.g., hand tremors) that may occur during a process of capturing an image of the subject. The camera device may include an AF actuator used for an auto-focus (AF) function for automatically adjusting a focal point of a lens with respect to a subject, and an OIS actuator used for an optical image stabilizer (OIS) function for compensating for image blur. The AF actuator may include an AF magnet and an AF coil. The AF actuator may adjust the focal point of the lens by moving a lens assembly of the camera device in an optical axis direction by using an electromagnetic force applied between the AF magnet and the AF coil. The OIS actuator may include an OIS magnet and an OIS coil. The OIS actuator may compensate for the image blur by moving the lens assembly of the camera device in a direction perpendicular to the optical axis by using an electromagnetic force applied between the OIS magnet and the OIS coil.

Meanwhile, the magnetic forces of the magnets disposed adj acent to the camera device may affect the AF magnet and the AF coil of the AF actuator, the OIS magnet, and/or the OIS coil, which may degrade the performance of the camera device. For example, the magnets disposed adjacent to the camera device increase an error rate of the AF function and/or the OIS function of the camera device, which may degrade the performance of the camera device.

According to an embodiment of the present disclosure, it is possible to provide a structure capable of preventing a situation in which the performance of the camera device is degraded by the magnets disposed adjacent to the camera device.

Technical problems to be solved by the present document are not limited to the above-mentioned technical problems, and other technical problems, which are not mentioned above, may be clearly understood from the following descriptions by those skilled in the art to which the present document pertains.

### [Solution to Problem]

An electronic device according to an embodiment of the present disclosure includes a first housing, a second housing rotatably connected to the first housing based on a folding axis, and a first camera device disposed in the first housing. In one embodiment the electronic device includes a first magnet disposed in the first housing and at least partially spaced apart from the first camera device, and a second magnet disposed in the second housing and configured to at least partially face the first magnet in a folded state of the electronic device. In one embodiment, the first camera device includes a lens assembly, an AF actuator configured to at least partially face the first magnet and move the lens assembly in an optical axis direction, a first shield member disposed between the first magnet and the AF actuator and configured to cover at least a part of the AF actuator, a first OIS actuator configured to move the lens assembly in a first axis direction perpendicular to the optical axis, and a second OIS actuator configured to move the lens assembly in a second axis direction perpendicular to the first axis.

An electronic device according to the embodiment of the present disclosure includes: a first housing; a second housing rotatably connected to the first housing based on a folding axis; and a first camera device disposed in the first housing. In one embodiment, the electronic device include a first magnet disposed in the first housing and at least partially spaced apart from the first camera device; and a second magnet disposed in the second housing and configured to at least partially face the first magnet in a folded state of the electronic device, in which the first camera device includes: a lens assembly; a camera housing including a first portion configured to accommodate the lens assembly and at least partially face the first magnet, a second portion opposite to the first surface, a third portion 323 configured to face a lateral member of the first housing, and a fourth portion opposite to the third portion; an AF actuator configured to move the lens assembly in an optical axis direction and positioned on any one of the second portion, the third portion, and the fourth portion of the camera housing; a first shield member disposed to cover at least a part of the AF actuator; a first OIS actuator configured to move the lens assembly in a first axis direction perpendicular to the optical axis, the first OIS actuator being positioned on one remaining surface among the second portion, the third portion, and the fourth portion of the camera housing; and a second OIS actuator 360 configured to move the lens assembly in a second axis direction perpendicular to the first axis, the second OIS actuator being positioned on another remaining surface among the second portion, the third portion, and the fourth portion of the camera housing.

### [Advantageous Effects of Invention]

According to the embodiment disclosed in the present document, it is possible to provide a structure capable of preventing a situation in which the performance of the camera device is degraded by the magnets disposed adjacent to the camera device. For example, the camera device may be disposed in the housing so that the AF actuator, which has the shield member for blocking a surrounding magnetic force, is directed toward the magnets disposed in the housing. Alternatively, the camera device may be disposed in the housing so that the surface, on which the AF actuator and the OIS actuator are not disposed, is directed toward the magnets disposed in the housing.

The effects obtained by the present disclosure are not limited to the aforementioned effects, and other effects, which are not mentioned above, will be clearly understood by those skilled in the art from the following description.

### [Brief Description of Drawings]

In connection with the description of the drawings, the same or similar reference numerals may be used for the same or similar components.
FIG. 1 is a block diagram of an electronic device 101 in a network environment 100 according to various embodiments.
FIG. 2A is a front perspective view of the electronic device in an unfolded state (a folded state or an unfolded state) according to various embodiments of the present disclosure.
FIG. 2B is a top plan view illustrating a front surface of the electronic device in the unfolded state according to various embodiments of the present disclosure.
FIG. 2C is a top plan view illustrating a rear surface of the electronic device in the unfolded state according to various embodiments of the present disclosure.
FIG. 3A is a perspective view of the electronic device in the folded state according to various embodiments of the present disclosure.
FIG. 3B is a perspective view illustrating the electronic device in an intermediate state according to various embodiments of the present disclosure.
FIG. 4 is an exploded perspective view of the electronic device according to various embodiments of the present disclosure.
FIG. 5A is an exploded perspective view illustrating a state in which a first camera device, a second camera device, a first speaker module, a second speaker module, and magnets are respectively assembled to a first housing and a second housing according to the embodiment of the present disclosure.
FIG. 5B is a view illustrating an arrangement state of the magnets respectively disposed in the first housing and the second housing when the front surface of the electronic device is viewed in a state in which the electronic device according to the embodiment of the present disclosure is unfolded.
FIG. 5C is a view illustrating an arrangement state of the magnets respectively disposed in the first housing and the second housing when the rear surface of the electronic device is viewed in the state in which the electronic device according to the embodiment of the present disclosure is unfolded.
FIG. 5D is a view for explaining positional relationships between electronic components, the first camera device, and the second camera device disposed in the first housing according to the embodiment of the present disclosure.
FIG. 6A is a view for explaining positional relationships between the magnets disposed in the first housing, the first camera device disposed in the first housing, the second camera device disposed in the first housing, and the electronic component disposed in the second housing in the state in which the electronic device according to the embodiment of the present disclosure is folded.
FIG. 6B is a view for explaining positional relationships between an AF actuator, a first OIS actuator, and a second OIS actuator disposed in the first camera device according to the embodiment of the present disclosure.
FIGS. 7A and 7B are views for explaining the AF actuator disposed in the camera housing so as not to face the first magnet when the electronic device is in a folded state.
Figures 8a and 8b are views for explaining the AF actuator is disposed in the camera housing to face the first magnet when the electronic device is in a folded state.
Figures 8c and 8d are views for explaining the AF actuator is disposed in the camera housing so as not to face the first magnet when the electronic device is in a folded state.
Figures 9a and 9b are views for explaining the magnets is disposed in the first housing and the second housing according to an embodiment of the present disclosure.
FIG. 10A is a cross-sectional view taken along line P1-P1 in FIG. 5D according to the embodiment of the present disclosure.
FIG. 10B is a cross-sectional view taken along line P2-P2 in FIG. 5D according to the embodiment of the present disclosure.
FIG. 10C is a cross-sectional view taken along line P3-P3 in FIG. 5D according to the embodiment of the present disclosure.
FIG. 11A is a view illustrating a state in which a second shield member is disposed between a first display and the first camera device in the state in which the electronic device according to the embodiment of the present disclosure is folded.
FIG. 11B is a view illustrating a state in which a second shield member is disposed between the first display and the speaker module in the state in which the electronic device according to the embodiment of the present disclosure is folded.
FIG. 12A is a view illustrating a state in which the first and second camera devices disposed in the first housing and the speaker module disposed in the second housing at least partially face one another in the state in which the electronic device according to the embodiment of the present disclosure is folded.
FIG. 12B is an exploded perspective view of the speaker module in FIG. 12A.

### [Mode for the Invention]

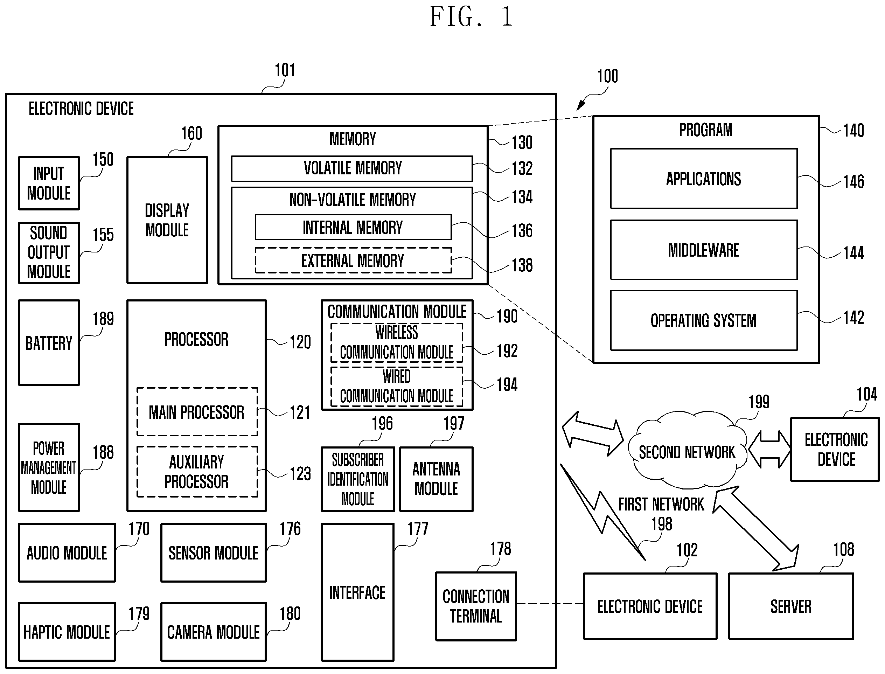

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

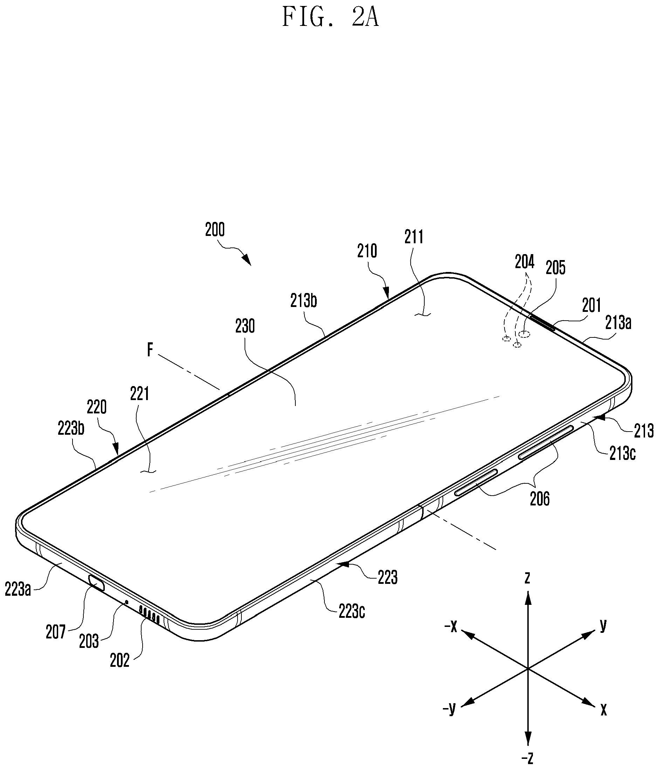

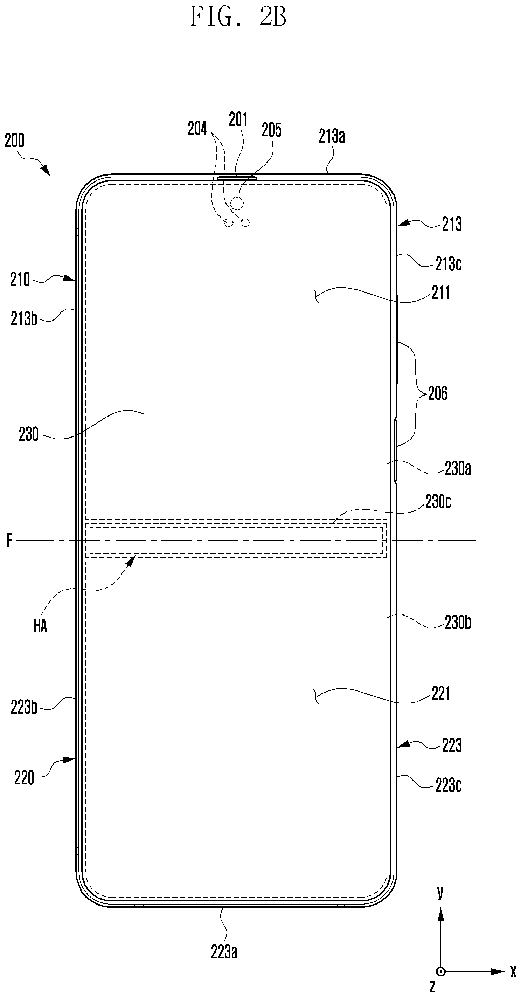

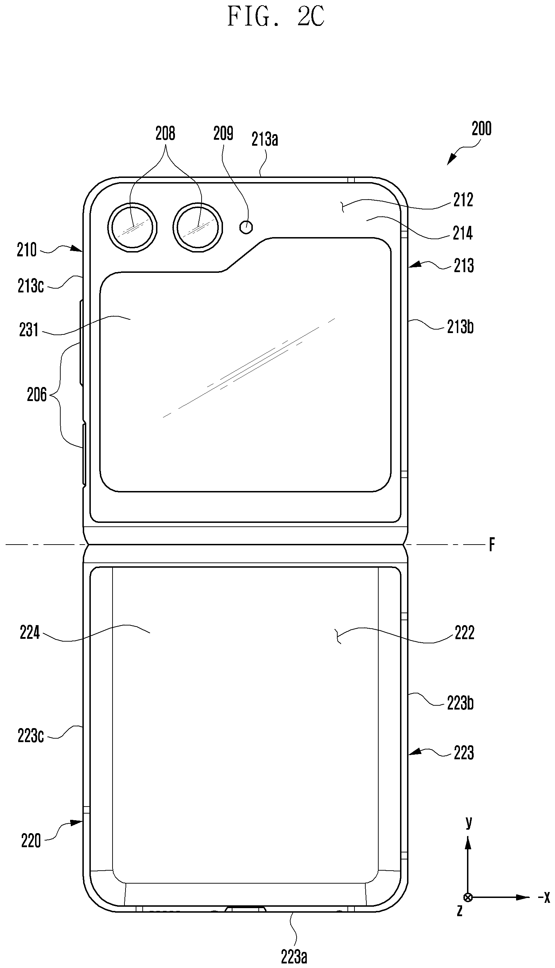

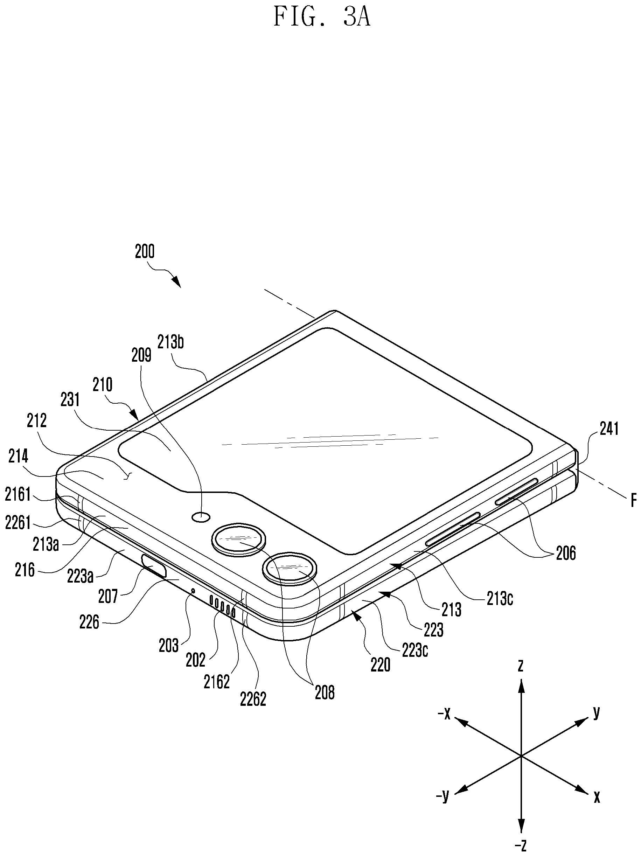

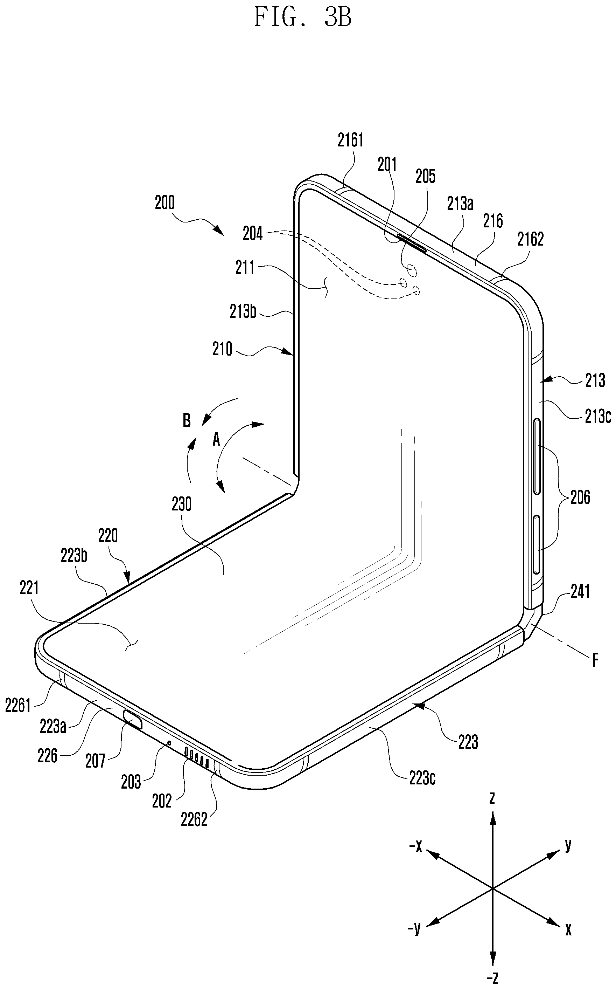

FIG. 2A is a front perspective view of the electronic device in an unfolded state (a folded state or an unfolded state) according to various embodiments of the present disclosure. FIG. 2B is a top plan view illustrating a front surface of the electronic device in the unfolded state according to various embodiments of the present disclosure. FIG. 2C is a top plan view illustrating a rear surface of the electronic device in the unfolded state according to various embodiments of the present disclosure. FIG. 3A is a perspective view of the electronic device in the folded state according to various embodiments of the present disclosure. FIG. 3B is a perspective view illustrating the electronic device in an intermediate state according to various embodiments of the present disclosure.

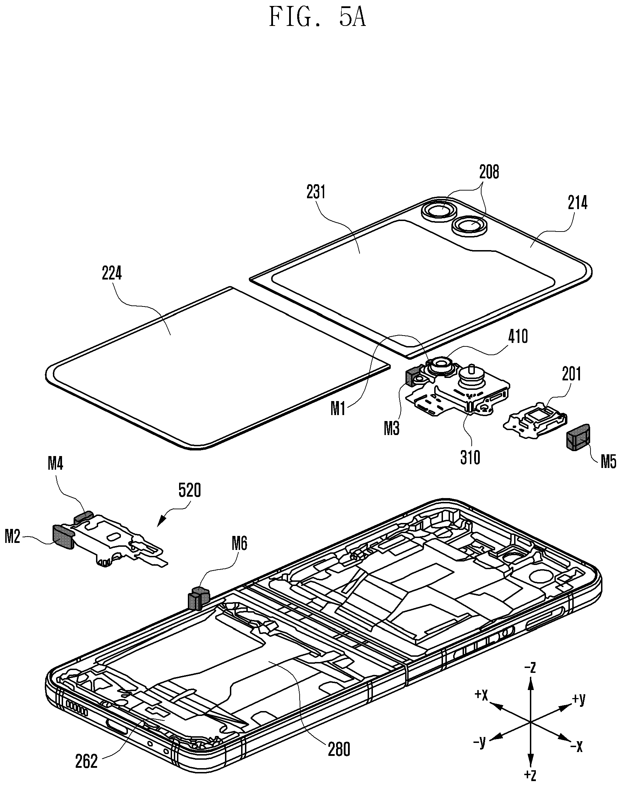

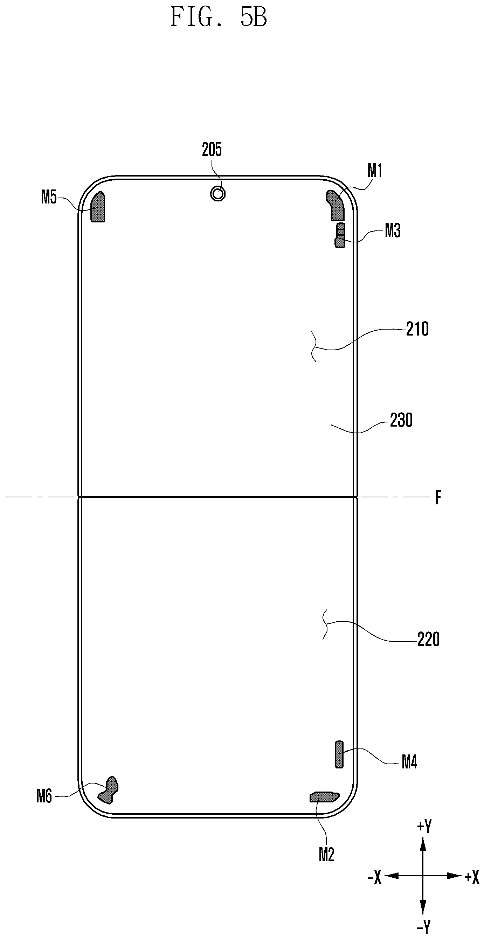

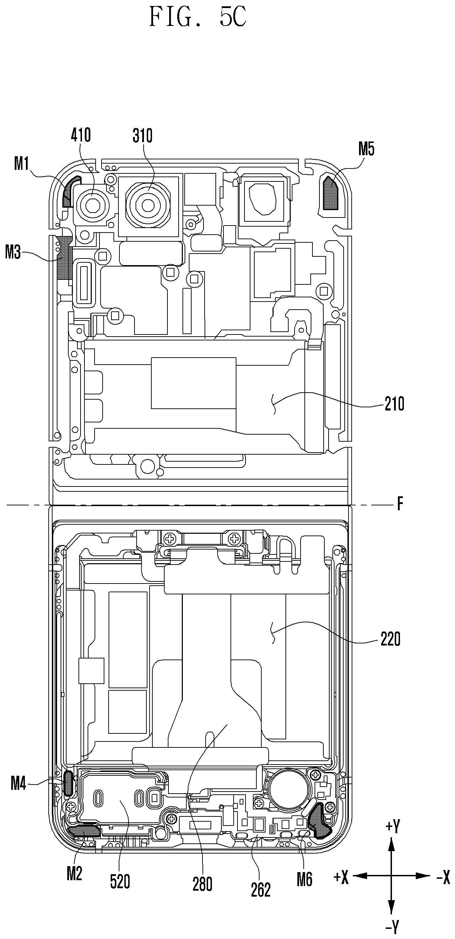

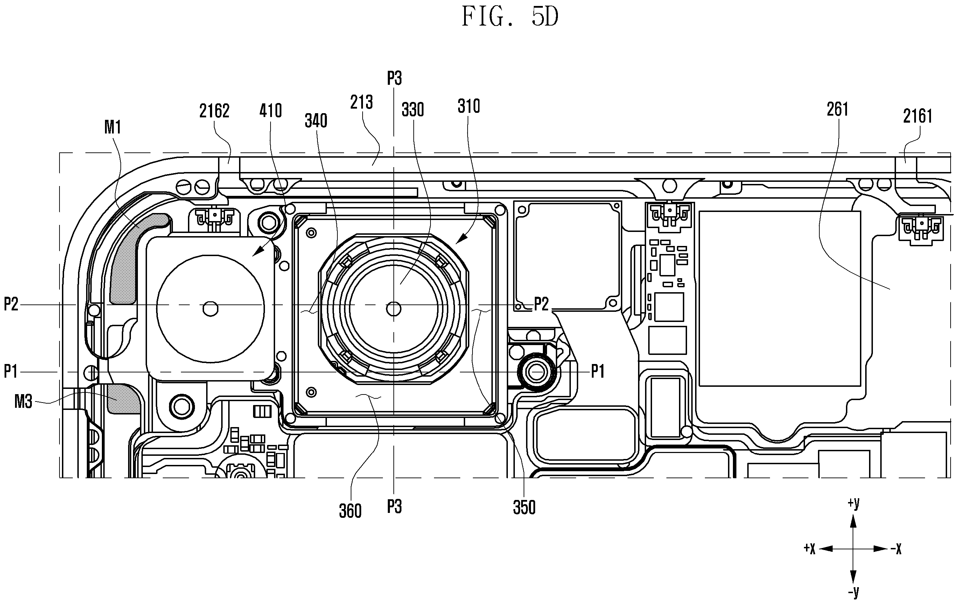

With reference to FIGS. 2A to 3B, an electronic device 200 (e.g., a foldable electronic device) may include a first housing 210 (e.g., a first housing part or a first housing structure) and a second housing 220 (e.g., a second housing part or a second housing structure) coupled to each other and configured to be foldable based on a hinge device (e.g., a hinge assembly HA in FIG. 2B) (e.g., a hinge assembly HA in FIG. 5) (e.g., a hinge module or a hinge structure). In the embodiment, the first housing 210, the second housing 220, and the hinge device (e.g., the hinge assembly HA in FIG. 2B) may include a foldable housing (e.g., a housing, a foldable housing structure, or a housing structure). In the embodiment, the hinge device (e.g., the hinge assembly HA in FIG. 2B) may be disposed in an x-axis direction or disposed in a y-axis direction. In the embodiment, the electronic device 200 may include a first display 230 (e.g., a flexible display, a foldable display, or a main display) disposed in an area (e.g., a recess) formed by the first and second housings 210 and 220. In the embodiment, the first housing 210 and the second housing 220 may be disposed at two opposite sides based on a folding axis F and have a substantially symmetric shape with respect to the folding axis F. In the embodiment, an angle or distance between the first housing 210 and the second housing 220 may vary depending on a state of the electronic device 200. For example, the angle or distance between the first housing 210 and the second housing 220 may vary depending on whether the electronic device is in an unfolded state (unfolded state or flat state), a folded state (folded state), or an intermediate state.

According to various embodiments, the first housing 210 may include a first surface 211 directed in a first direction (e.g., a front surface direction) (z-axis direction) in the unfolded state of the electronic device 200, and a second surface 212 directed in a second direction (e.g., a rear surface direction) (-z-axis direction) opposite to the first surface 211. In the embodiment, the second housing 220 may include a third surface 221 directed in the first direction (z-axis direction) in the unfolded state of the electronic device 200, and a fourth surface 222 directed in the second direction (-z-axis direction). In the embodiment, in the unfolded state of the electronic device 200, the first surface 211 of the first housing 210 and the third surface 221 of the second housing 220 may be directed in substantially the same first direction (z-axis direction). In the embodiment, in the folded state of the electronic device 200, the first surface 211 of the first housing 210 and the third surface 221 of the second housing 220 may face each other. In the embodiment, in the unfolded state of the electronic device 200, the second surface 212 of the first housing 210 and the fourth surface 222 of the second housing 220 may be directed in substantially the same second direction (-z-axis direction). In the embodiment, in the folded state of the electronic device 200, the second surface 212 of the first housing and the fourth surface 222 of the second housing 220 may be directed in opposite directions. For example, in the folded state of the electronic device 200, the second surface 212 may be directed in the first direction (z-axis direction), and the fourth surface 222 may be directed in the second direction (-z-axis direction). In this case, the first display 230 may not be visible from the outside (in-folding manner). In the embodiment, the electronic device 200 may be folded so that the second surface 212 of the first housing 210 and the fourth surface 222 of the second housing 220 face each other. In this case, the first display 230 may be disposed to be visible from the outside (out-folding manner).

According to various embodiments, the first housing 210 (e.g., the first housing structure) may include a first lateral member 213 configured to at least partially define an external appearance of the electronic device 200, and a first rear surface cover 214 coupled to the first lateral member 213 and configured to define at least a part of the second surface 212 of the electronic device 200. In the embodiment, the first lateral member 213 may include a first side surface 213a, a second side surface 213b extending from one end of the first side surface 213a, and a third side surface 213c extending from the other end of the first side surface 213a. In the embodiment, the first lateral member 213 may have a rectangular shape (e.g., a square shape) defined by the first side surface 213a, the second side surface 213b, and the third side surface 213c.

According to various embodiments, the second housing 220 (e.g., the second housing structure) may include a second lateral member 223 configured to at least partially define the external appearance of the electronic device 200, and a second rear surface cover 224 coupled to the second lateral member 223 and configured to define at least a part of the fourth surface 222 of the electronic device 200. In the embodiment, the second lateral member 223 may include a fourth side surface 223a, a fifth side surface 223b extending from one end of the fourth side surface 223a, and a sixth side surface 223c extending from the other end of the fourth side surface 223a. In the embodiment, the second lateral member 223 may have a rectangular shape defined by the fourth side surface 223a, the fifth side surface 223b, and the sixth side surface 223c.

According to various embodiments, the first and second housings 210 and 220 are not limited by illustrated shapes and coupling and may be implemented by combination and/or coupling of other shapes or components. In the embodiment, the first lateral member 213 may be integrated with the first rear surface cover 214, and the second lateral member 223 may be integrated with the second rear surface cover 124.

According to various embodiments, in the unfolded state of the electronic device 200, the second side surface 213b of the first lateral member 213 and the fifth side surface 223b of the second lateral member 223 may be connected without any gap. In the embodiment, in the unfolded state of the electronic device 200, the third side surface 213c of the first lateral member 213 and the sixth side surface 223c of the second lateral member 223 may be connected without any gap. In the embodiment, in the unfolded state of the electronic device 200, a sum of a length of the second side surface 213b and a length of the fifth side surface 223b may be longer than a length of the first side surface 213a and/or a length of the fourth side surface 223a. In the embodiment, in the unfolded state of the electronic device 200, a sum of a length of the third side surface 213c and a length of the sixth side surface 223c may be longer than a length of the first side surface 213a and/or a length of the fourth side surface 223a.

With reference to FIGS. 3A and 3B, the first lateral member 213 and/or the second lateral member 223 may be made of metal or further include a polymer injected into metal. In the embodiment, the first lateral member 213 and/or the second lateral member 223 may each include at least one conductive portion 216 and/or 226 electrically segmented by at least one segmenting portion 2161 or 2162 and/or 2261 or 2262 made of a polymer. In this case, at least one conductive portion 216 and/or 226 may be electrically connected to a wireless communication circuit included in the electronic device 200 and serve as at least a part of an antenna that operates in at least one designated band (e.g., a legacy band or a new radio (NR) band).

According to various embodiments, for example, the first rear surface cover 214 and/or the second rear surface cover 224 may each be made of at least one of coated or tinted glass, ceramic, polymer, and metal (e.g., aluminum, stainless steel (STS), or magnesium), or a combination of at least two of the above-mentioned materials.

According to various embodiments, the first display 230 may be disposed to extend from the first surface 211 of the first housing 210 to at least a part of the third surface 221 of the second housing 220 while traversing the hinge device (e.g., the hinge assembly HA in FIG. 2B). In the embodiment, the first display 230 may include a first area 230a substantially corresponding to the first surface 211, a second area 230b corresponding to the second surface 212, and a third area 230c (e.g., a folding area or a bendable area) configured to connect the first area 230a and the second area 230b. In the embodiment, the third area 230c may be a part of the first area 230a and/or a part of the second area 230b and disposed at a position corresponding to the hinge device (e.g., the hinge assembly HA in FIG. 2B). In the embodiment, the electronic device 200 may include a hinge housing 241 (e.g., a hinge cover) configured to support the hinge device (e.g., the hinge assembly HA in FIG. 2B). In the embodiment, in the folded state of the electronic device 200, at least a part of the hinge housing 241 may be visually exposed to the outside. In the unfolded state of the electronic device 200, the hinge housing 241 is retracted into an internal space of the first housing 210 and an internal space of the second housing 220, such that the hinge housing 241 may be disposed so as to be invisible from the outside.

According to various embodiments, the electronic device 200 may include a second display 231 (e.g., a sub-display) disposed separately from the first display 230. In the embodiment, the second display 231 may be disposed to be at least partially and visually exposed from the second surface 212 of the first housing 210. In the embodiment, in the folded state of the electronic device 200, the second display 231 may display at least a part of state information of the electronic device 200 while replacing at least a part of a display function of the first display 230. In the embodiment, the second display 231 may be disposed to be visible from the outside through at least a partial area of the first rear surface cover 214. In the embodiment, the second display 231 may be disposed on the fourth surface 222 of the second housing 220. In this case, the second display 231 may be disposed to be visible from the outside through at least a partial area of the second rear surface cover 224.

According to various embodiments, the electronic device 200 may include at least one of an input device 203 (e.g., a microphone), sound output devices 201 and 202, a sensor module 204, camera devices 205 and 208, a key input device 206, and a connector port 207. In the illustrated embodiment, the input device 203 (e.g., the microphone), the sound output devices 201 and 202, the sensor module 204, the camera devices 205 and 208, the key input device 206, and the connector port 207 are illustrated as holes or circular elements formed in the first housing 210 or the second housing 220. However, this is provided for illustrative purposes only, and the present disclosure is not limited thereto. According to various embodiments, the input device 203 may include at least one microphone 203 disposed in the second housing 220. In the embodiment, the input device 203 may include a plurality of microphones 203 disposed to detect a direction of sound. In the embodiment, the plurality of microphones 203 may be disposed at appropriate positions in the first housing 210 and/or the second housing 220. In the embodiment, the sound output devices 201 and 202 may include one or more speakers 201 and 202. In the embodiment, the one or more speakers 201 and 202 may include a telephone receiver 201 disposed in the first housing 210, and a speaker 202 disposed in the second housing 220. In the embodiment, the input device 203, the sound output devices 201 and 202, and the connector port 207 may be disposed in spaces provided in the first housing 210 and/or the second housing 220 of the electronic device 200 and exposed to an external environment through at least one hole formed in the first housing 210 and/or the second housing 220. In the embodiment, the at least one connector port 207 may be used to receive and/or transmit electric power and/or data from and/or to an external electronic device. In the embodiment, at least one connector port (e.g., an earphone jack hole) may accommodate a connector (e.g., an earphone jack) for receiving and/or transmitting audio signals from and/or to the external electronic device. In the embodiment, the hole formed in the first housing 210 and/or the second housing 220 may be used in common for the input device 203 and the sound output devices 201 and 202. In the embodiment, the sound output devices 201 and 202 may also include speakers (e.g., piezoelectric speakers) that are not exposed through the holes formed in the first housing 210 and/or the second housing 220.

According to various embodiments, the sensor module 204 may generate electrical signals or data values corresponding to an internal operating state of the electronic device 200 or the external environment state. In the embodiment, the sensor module 204 may detect an external environment through the first surface 211 of the first housing 210. In the embodiment, the electronic device 200 may further include at least one sensor module disposed to detect the external environment through the second surface 212 of the first housing 210. In the embodiment, the sensor module 204 (e.g., an illuminance sensor) may be disposed below the first display 230 and detect the external environment through the first display 230. In the embodiment, the sensor module 204 may include at least one of a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, an illuminance sensor, a proximity sensor, a biosensor, an ultrasonic sensor, and the illuminance sensor 204.

According to various embodiments, the camera devices 205 and 208 may include a first camera device 205 (e.g., a front surface camera device) disposed on the first surface 211 of the first housing 210, and a second camera device 208 disposed on the second surface 212 of the first housing 210. In the embodiment, the electronic device 200 may further include a flash 109 disposed in the vicinity of the second camera device 208. In the embodiment, the camera devices 205 and 208 may include at least one lens, an image sensor, and/or an image signal processor. In the embodiment, the camera devices 205 and 208 may be disposed so that two or more lenses (wide angle lenses, ultrawide angle lenses, or telephoto lenses) and two or more image sensors are positioned on one surface (e.g., the first surface 211, the second surface 212, the third surface 121, or the fourth surface 122) of the electronic device 200. In the embodiment, the camera devices 205 and 208 may include time-of-flight (TOF) lenses and/or image sensors.

According to various embodiments, the key input device 206 (e.g., a key button) may be disposed on the third side surface 213c of the first lateral member 213 of the first housing 210. In the embodiment, the key input device 206 may be disposed on at least one of the other side surfaces 213a and 213b of the first housing 210 and/or the side surfaces 223a, 223b, and 223c of the second housing 220. In the embodiment, the electronic device 200 may exclude some or all of the key input devices 206, and the excluded key input device 206 may be implemented as other types such as a soft key on the first display 230. In the embodiment, the key input device 206 may be implemented by using a pressure sensor included in the first display 230.

According to various embodiments, one (e.g., the first camera device 205) of the camera devices 205 and 208 or the sensor module 204 may be disposed to be visually exposed through the first display 230. In the embodiment, the first camera device 205 or the sensor module 204 may be disposed in the internal space of the electronic device 200 and optically exposed to the outside through an opening (e.g., a through-hole) at least partially formed in the first display 230. In the embodiment, at least a part of the sensor module 204 may be disposed in the internal space of the electronic device 200 so as not to be visually exposed through the first display 230. With reference to FIG. 3B, the electronic device 200 may operate to maintain at least one designated folding angle in the intermediate state by means of the hinge device (e.g., the hinge assembly HA in FIG. 2B). For example, the electronic device 200 may control the first display 230 to display different contents in a display area corresponding to the first surface 211 and a display area corresponding to the third surface 221. **In** the embodiment, the electronic device 200 may operate in the substantially unfolded state (e.g., the unfolded state in FIG. 2A) and/or the substantially folded state (e.g., the folded state in FIG. 3A) based on a predetermined folding angle (e.g., an angle between the first housing 210 and the second housing 220 in the intermediate state of the electronic device 200) by means of the hinge device (e.g., the hinge assembly HA in FIG. 2B). **In** the embodiment, in the state in which the electronic device 200 is unfolded at a predetermined folding angle, the electronic device 200 may operate to switch to the unfolded state (e.g., the unfolded state in FIG. 2A) by means of the hinge device (e.g., the hinge assembly HA in FIG. 2B) when a pressing force is provided in an unfolding direction (A direction). **In** the embodiment, in the state in which the electronic device 200 is unfolded at the predetermined folding angle, the electronic device 200 may operate to switch to the folded state (e.g., the folded state in FIG. 3A) by means of the hinge device (e.g., the hinge assembly HA in FIG. 2B) when a pressing force is provided in a folding direction (B direction). **In** the embodiment, the electronic device 200 may operate to maintain the unfolded state (not illustrated) at various folding angles by means of the hinge device (e.g., the hinge assembly HA in FIG. 2B) (a free stop function).

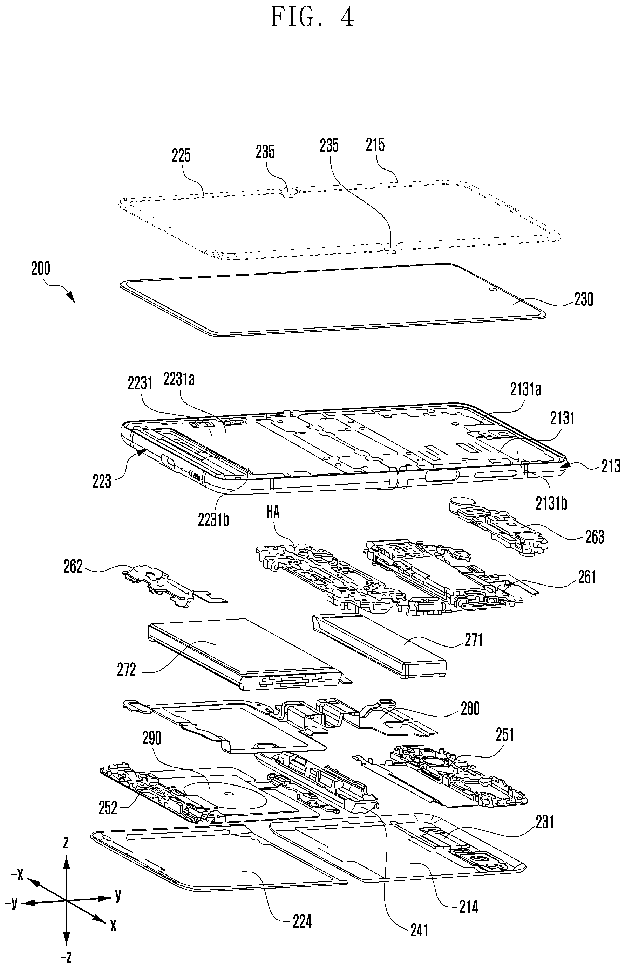

FIG. 4 is an exploded perspective view of the electronic device according to various embodiments of the present disclosure.

With reference to FIG. 4, the electronic device 200 may include the hinge assembly HA (e.g., the hinge assembly HA in FIG. 2B) (e.g., a hinge device, a hinge module, or a hinge structure) configured to connect the first lateral member 213 (e.g., the first side surface frame), the second lateral member 223 (e.g., the second side surface frame), the first lateral member 213, and the second lateral member 223 so that the first lateral member 213, the second lateral member 223, the first lateral member 213, and the second lateral member 223 are rotatable. In the embodiment, the electronic device 200 may include a first support member 2131 (e.g., a first support plate) at least partially extending from the first lateral member 213, and a second support member 2231 (e.g., a second support plate) at least partially extending from the second lateral member 223. In the embodiment, the first support member 2131 may be integrated with the first lateral member 213 or structurally coupled to the first lateral member 213. In the embodiment, the second support member 2231 may be integrated with the second lateral member 223 or structurally coupled to the second lateral member 223. In the embodiment, the first display 230 may be disposed to be supported by the first support member 2131 and the second support member 2231. In the embodiment, the electronic device 200 may include the first rear surface cover 214 coupled to the first lateral member 213 and configured to provide a first space between the first support member 2131 and the first rear surface cover 214, and the second rear surface cover 224 coupled to the second lateral member 223 and configured to provide a second space between the second support member 2231 and the second rear surface cover 224. In the embodiment, the first lateral member 213 and the first rear surface cover 214 may be integrated. In the embodiment, the second lateral member 223 and the second rear surface cover 124 may be integrated. In the embodiment, the first housing 210 may include the first lateral member 213, the first support member 2131, and the first rear surface cover 214. In the embodiment, the second housing 220 may include the second lateral member 223, the second support member 2231, and the second rear surface cover 224. In the embodiment, the electronic device 200 may include the second display 231 disposed to be visible from the outside through at least a partial area of the first rear surface cover 214.

According to various embodiments, the electronic device 200 may include a first substrate 261 (e.g., a first substrate assembly or a main printed circuit board), a camera assembly 263, a first battery 271, or a first bracket 251 disposed in the first space between the first lateral member 213 and the first rear surface cover 214. In the embodiment, the camera assembly 263 may include the plurality of camera devices (e.g., the camera devices 205 and 208 in FIGS. 2A and 3A) and be electrically connected to the first substrate 261. In the embodiment, the first bracket 251 may provide a support structure for supporting the first substrate 261 and/or the camera assembly 263 and provide improved rigidity. In the embodiment, the electronic device 200 may include a second substrate 262 (e.g., a second substrate assembly or a sub-printed circuit board), an antenna 290 (e.g., a coil member), a second battery 272, or a second bracket 252 disposed in the second space between the second lateral member 223 and the second rear surface cover 224. In the embodiment, the electronic device 200 may include a wiring member 280 (e.g., a flexible substrate (flexible printed circuit board (FPCB))) configured to provide electrical connection and disposed to extend from the first substrate 261 to the plurality of electronic components (e.g., the second substrate 262, the second battery 272, or the antenna 290), which is disposed between the second lateral member 223 and the second rear surface cover 224, while traversing the hinge assembly HA. In the embodiment, the antenna 290 may include a near-field communication (NFC) antenna, a wireless charging antenna, and/or a magnetic secure transmission (MST) antenna.

According to various embodiments, the electronic device 200 may include a first protective cover 215 (e.g., a first protective frame or a first decorative member) coupled along an edge of the first housing 210, and a second protective cover 225 (e.g., a second protective frame or a second decorative member) coupled along an edge of the second housing 220. In the embodiment, the first protective cover 215 and/or the second protective cover 225 may be made of metal or a polymer material. In the embodiment, the first protective cover 215 and/or the second protective cover 225 may be used as decorative members. In this case, the first display 230 may be disposed so that an edge of the first area (e.g., the first area 230a in FIG. 2B) is not visible from the outside between the first housing 210 and the first protective cover 215. In the embodiment, the first display 230 may be disposed so that an edge of the second area (e.g., the second area 230b in FIG. 2B) is not visible from the outside between the second housing 220 and the second protective cover 225. In any embodiment, the first protective cover 215 and/or the second protective cover 225 may be excluded.

According to various embodiments, the electronic device 200 may also include a protective structure 135 disposed to protect an edge of the third area (e.g., the third area 230c in FIG. 2B) of the first display 230. In this case, the edge of the first display 230 may be protected by a protective structure 235 disposed at a position corresponding to the folding area (e.g., the folding area 230c in FIG. 2B). In any embodiment, the protective structure 235 may be excluded.

According to various embodiments, the first support member 2131 may include a first support surface 2131a directed in the first direction (z-axis direction), and a second support surface 2131b directed in the second direction (-z-axis direction) opposite to the first direction. In the embodiment, the second support member 2231 may include a third support surface 2231a directed in the first direction (z-axis direction) in the unfolded state of the electronic device 200, and a fourth support surface 2231b directed in the second direction (-z-axis direction). In the embodiment, the first display 230 may be disposed to be supported by the first support surface 2131a of the first support member 2131 and the third support surface 2231a of the second support member 2231.

FIG. 5A is an exploded perspective view illustrating a state in which a first camera device, a second camera device, a first speaker module, a second speaker module, and magnets are respectively assembled to the first housing and the second housing according to the embodiment of the present disclosure. FIG. 5B is a view illustrating an arrangement state of the magnets respectively disposed in the first housing and the second housing when the front surface of the electronic device is viewed in a state in which the electronic device according to the embodiment of the present disclosure is unfolded. FIG. 5C is a view illustrating an arrangement state of the magnets respectively disposed in the first housing and the second housing when the rear surface of the electronic device is viewed in the state in which the electronic device according to the embodiment of the present disclosure is unfolded. FIG. 5D is a view for explaining positional relationships between the electronic components, the first camera device, and the second camera device disposed in the first housing according to the embodiment of the present disclosure.

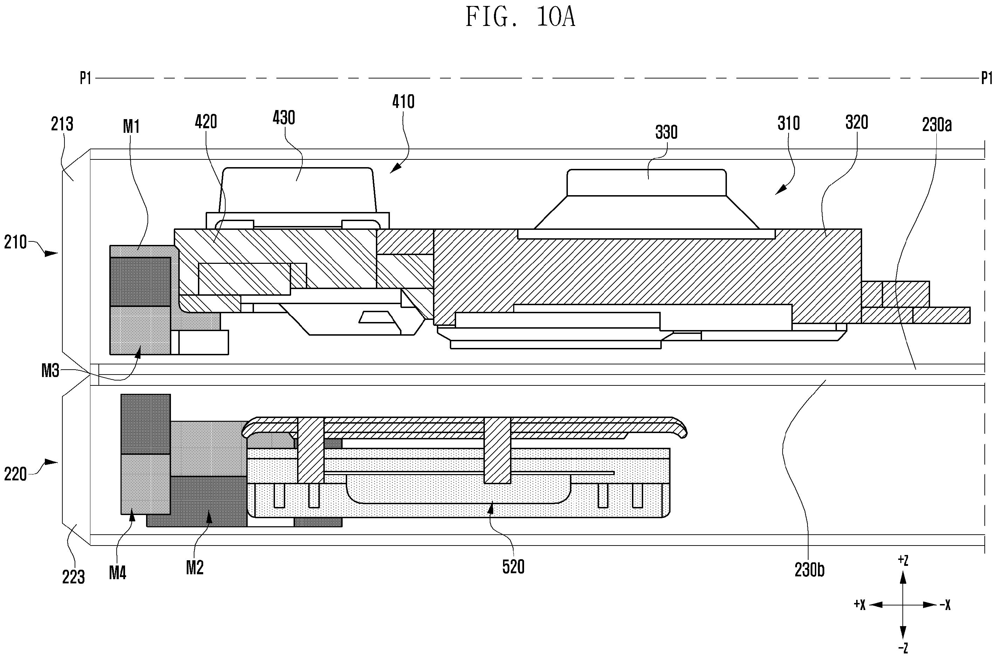

In the embodiment, with reference to FIG. 5A, the first housing (210) includes a first camera device 310 (e.g., first camera module, the second camera device 208 in FIG. 2C and/or the camera assembly 263 in FIG. 4), a second camera device 410 (e.g., second camera module the second camera device 208 in FIG. 2C and/or the camera assembly 263 in FIG. 4), a first speaker module (e.g., the sound output device 201 in FIG. 2A), a first magnet M1, a third magnet M3, and a fifth magnet M5 may be disposed. In the embodiment, the first camera device 310, the second camera device 410, and the first speaker module 201 may be disposed in parallel in the x-axis direction in FIG. 5A in the first housing 210. In the embodiment, the second housing (220) includes a second speaker module (e.g., the sound output device 202 in FIG. 2A or a second speaker module 520 in FIG. 10A), the second substrate 262, a second magnet M2, a fourth magnet M4, and a sixth magnet M6 may be disposed. In the embodiment, the second speaker module 520 and the second substrate 262 may be disposed in parallel in the x-direction based on FIG. 5A.

According to the embodiment, as illustrated in FIGS. 5A, 5B, and 5C, the plurality of magnets (e.g., magnetic materials) M1, M2, M3, M4, M5, and M6 may be disposed in the first housing 210 and the second housing 220. In the embodiment, the electronic device 200 may include the magnets M1, M3, and M5 disposed in the first housing 210, and the magnets M2, M4, and M6 disposed in the second housing 220. In the embodiment, the first magnet M1 and the third magnet M3 may be positioned in the second direction (e.g., the +x-axis direction based on FIG. 5A) with respect to the second camera device 410. In the embodiment, the fifth magnet M5 may be positioned with respect to the first camera device 310 in the first direction (e.g., the - x-axis direction based on FIG. 5A) opposite to the second direction. In the embodiment, in the second housing 220, the sixth magnet M6 may be positioned in the -x-axis direction based on FIG. 5A with respect to the second magnet M2 and the fourth magnet M4, and the second magnet M2 and the fourth magnet M4 may be positioned in the +x-axis direction based on FIG. 5A with respect to the sixth magnet M6. In the embodiment, the second magnet M2 and the fourth magnet M4 may be positioned in the second direction (e.g., the +x-axis direction based on FIG. 5A) with respect to the second speaker module 520. The sixth magnet M6 may be positioned in the first direction (e.g., the -x-axis direction based on FIG. 5A) with respect to the second speaker module 520.

In the embodiment, the magnets M1, M3, and M5 disposed in the first housing 210 and the magnets M2, M4, and M6 disposed in the second housing 220 may at least partially face one another in the folded state of the electronic device. In the embodiment, in the folded state of the electronic device, the first magnet M1 and the second magnet M2 may at least partially face each other. In the embodiment, in the folded state of the electronic device, the third magnet M3 and the fourth magnet M4 may at least partially face each other. In the embodiment, in the folded state of the electronic device, the fifth magnet M5 and the sixth magnet M6 may at least partially face each other. In the embodiment, in the folded state, the first housing 210 and the second housing 220 may maintain the folded state by using attractive forces applied between the magnets M1, M2, M3, M4, M5, and M6. In the embodiment, when the electronic device 200 is folded, the intensity of the attractive forces applied between the magnets M1, M2, M3, M4, M5, and M6 may be higher than the intensity of the repulsive force generated when the first display 230 (e.g., the flexible display) is folded.

The above-mentioned description does not limit the number of magnets included in the first housing 210 and the second housing 220. The electronic device 200 may exclude any one of the first magnet M1, the second magnet M2, the third magnet M3, the fourth magnet M4, the fifth magnet M5, and the sixth magnet M6 or further include another magnet. In the embodiment, the electronic device (200) includes magnets (e.g., first magnet (M1), second magnet (M2), third magnet (M3), fourth magnet (M4)) disposed adjacent to the first camera device (310) and the second camera device (410). In the embodiment, the first magnet (M1) and the third magnet (M3) may be positioned in the first housing (210) alongside the first camera device (310) and the second camera device (410), so that they are adjacent to the first camera device (310) and the second camera device (410) regardless of whether the electronic device (200) is in a folded or unfolded state. The second magnet (M2) and the fourth magnet (M4) may be positioned in the second housing (220), so that when the electronic device (200) is in a folded state, they are adjacent to the first camera device (310) and the second camera device (410). The number of magnets described above is merely exemplary, and the number of magnets may be varied as needed.

In the embodiment, at least one of the magnets (M1, M2, M3, M4) adjacent to the camera devices (310, 410) may be a multipole magnet. A multipole magnet may consist of at least two N-poles and at least two S-poles. In the embodiment, the multipole magnet may be a magnet with a Halbach array.

In the embodiment, with reference to FIGS. 5A to 5D, the first magnet M1, the third magnet M3, and/or the fifth magnet M5 may be disposed at a corner of the first housing 210 and provided in the first housing 210 so as to be adjacent to the first lateral member 213. For example, the first magnet M1, the third magnet M3, and/or the fifth magnet M5 may be disposed at an edge of the side surface of the first housing 210. The second magnet M2, the fourth magnet M4, and/or the sixth magnet M6 may be disposed at a corner of the second housing 220 and provided in the second housing 120 so as to be adjacent to the second lateral member 223. For example, the second magnet M2, the fourth magnet M4, and/or the sixth magnet M6 may be disposed at an edge of the side surface of the second housing 220.

In the embodiment, the magnets M1, M3, and M5 disposed in the first housing 210 and the magnets M2, M4, and M6 disposed in the second housing 220 may be formed in various shapes. In the embodiment, with reference to FIGS. 5A, 5B, 5C, and 5D, the magnets M1, M2, M3, M4, M5, and M6, which face one another when the electronic device 200 is folded, may be formed in different shapes. In one embodiment that is not illustrated in the drawings, the plurality of magnets M1, M2, M3, M4, M5, and M6 may be formed in the same shape.

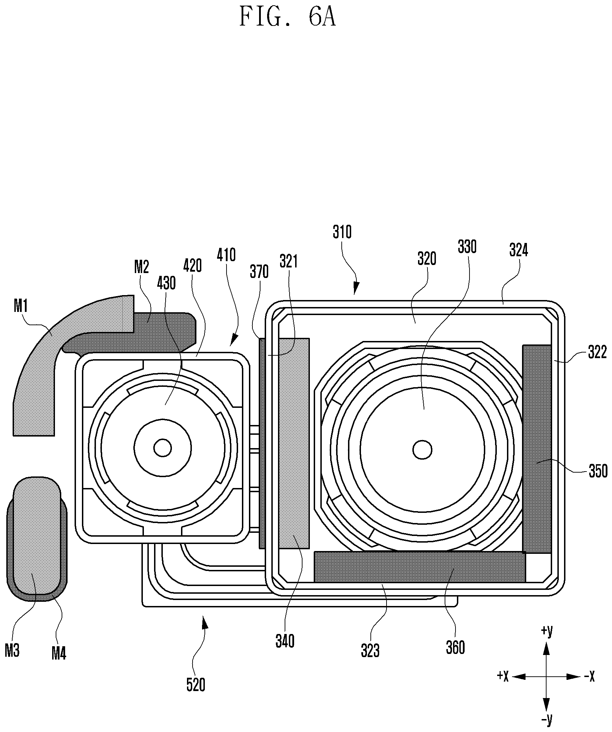

In the embodiment, with reference to FIGS. 5A, 5C, and 5D, the first camera device 310 and the second camera device 410 may be disposed in parallel along the x-axis in FIG. 5D in the first housing 210. In the embodiment, the first camera device (310) may be positioned in the first direction (e.g., the -x direction in FIG. 5d) with respect to the first magnet (M1). The second camera device (410) may be positioned between the first camera device (310) and the first magnet (M1). For example, the second camera device (410) may be positioned in the second direction (e.g., the +x direction in FIG. 5d) opposite to the first direction with respect to the first camera device (310). In the embodiment, with reference to FIG. 5C, in the folded state of the electronic device 200, the first magnet M1 and the third magnet M3 disposed in the first housing 210 and the second magnet M2 and the fourth magnet M4 disposed in the second housing 220 may be positioned in the second direction (e.g., the +x-axis direction based on FIG. 6A) with respect to the first camera device 310.

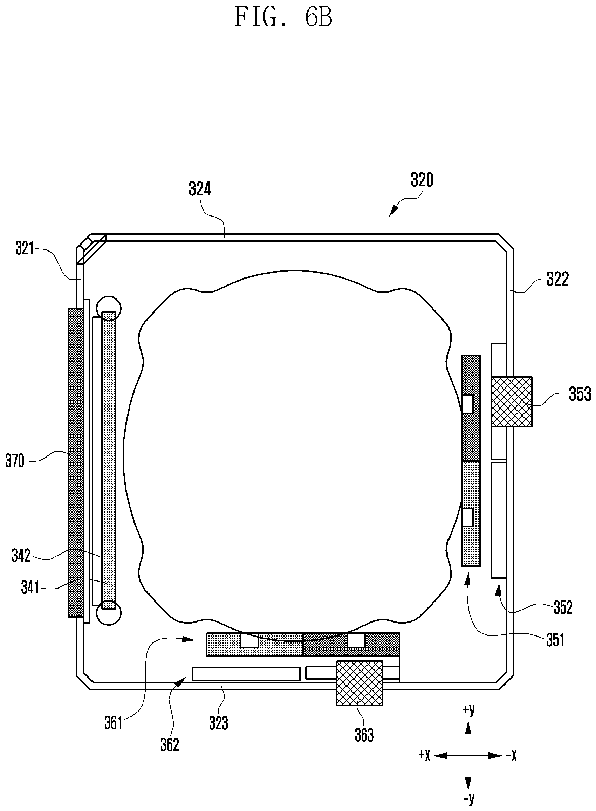

In the embodiment, the second camera device 410 may be disposed in the first housing 210 and positioned between the magnets M1 and M3 and the first camera device 310. In the embodiment, the first camera device 310 may be a camera device including an auto-focus (AF) function for automatically adjusting a focal point of a lens with respect to a subject, and an optical image stabilizer (OIS) function (hereinafter, referred to as an 'OIS function') for compensating for image blur. In the embodiment, an AF actuator 340 of the first camera device 310 may include an AF magnet 341(e.g., the AF magnet 341 in FIG 6b) and an AF coil 342(e.g., the AF coil 342 in FIG 6b) that generate an electromagnetic force in order to move a first lens assembly 330 of the first camera device 310 in a substantially optical axis direction (e.g., the z-axis direction based on FIG 5A). In the embodiment, the first camera device 310 may perform an OIS function by means of a first OIS actuator 350 and a second OIS actuator 360. In the embodiment, the first OIS actuator 350 may include a first OIS coil 352(e.g., the first OIS coil 352 in FIG 6b) and a first OIS magnet 351(e.g., the first OIS magnet 351 in FIG 6b) that generate an electromagnetic force in order to move the first lens assembly 330 of the first camera device 310 in a direction substantially perpendicular to the optical axis (e.g., the x-axis direction based on FIG .5A or the y-axis direction based on FIG.5A). In addition, in the embodiment, the second OIS actuator 360 may include a second OIS coil 362 (e.g., the second OIS coil 362 in FIG 6b) and a second OIS magnet 361 (e.g., the second OIS magnet 361 in FIG 6b) that generate an electromagnetic force in order to move the first lens assembly 330 of the first camera device 310 in the direction substantially perpendicular to the optical axis (e.g., the x-axis direction based on FIG .5A or the y-axis direction based on FIG.5A.

In the embodiment, the second camera device 410 may not include the AF function and/or the OIS function. Therefore, the second camera device 410 may not include the magnetic elements (e.g., the AF magnet 341 and the AF coil 342) used for the AF function and the magnetic elements (e.g., the first OIS magnet 351, the first OIS coil 352, the second OIS magnet 361, and the second OIS coil 362) used for the OIS function.

In the embodiment, the magnetic force generated by the magnets (e.g., M1, M2, M3, and M4) disposed adjacent to the first camera device 310 may affect the AF magnet 341, the AF coil 342, the first OIS magnet 351, the first OIS coil 352, the second OIS magnet 361, and/or the second OIS coil 362, which may degrade the performance of the first camera device 310. For example, the magnetic force, which is generated by the first magnet M1 and the third magnet M3 disposed adjacent to the first camera device 310 in the unfolded state of the electronic device 200, and the magnetic force, which is generated by the first magnet M1, the second magnet M2, the third magnet M3, and the fourth magnet M4 disposed adjacent to the first camera device 310 in the folded state of the electronic device 200, affect the AF magnet 341, the AF coil 342, the first OIS magnet 351, the first OIS coil 352, the second OIS magnet 361, and/or the second OIS coil 362, which may increase an error rate of the AF function and/or the OIS function of the first camera device 310 and degrade the performance of the first camera device 310. For example, an error rate related to the movement of the first lens assembly 330 in the optical axis direction for adjusting the focal point of the lens may increase, or an error rate related to the movement of the first lens assembly 330 in the direction (e.g., the first axis or the second axis) perpendicular to the optical axis for compensating for image blur may increase.

The first camera device 310, which has been described above, may include an error rate of the AF actuator 340, an error rate of the first OIS actuator 350, an error rate of the second OIS actuator 360, an EM force of the AF actuator 340, an EM force of the first OIS actuator 350, and an EM force of the second OIS actuator 360 that will be described with reference to Tables 2, 3, and 4 below.

According to the embodiment of the present disclosure, it is possible to provide a structure for preventing the situation in which the performance of the first camera device 310 is degraded by the magnets M1, M2, M3, M4, M5, and M6 disposed adjacent to the first camera device 310. The structure will be described below in detail.

FIG. 6A is a view for explaining positional relationships between the magnets disposed in the first housing 210, the first camera device 310 disposed in the first housing 210, the second camera device 410 disposed in the first housing 210, and the electronic component disposed in the second housing 220 in the folded state of the electronic device 200 according to the embodiment of the present disclosure. FIG. 6B is a view for explaining positional relationships between the AF actuator 340, the first OIS actuator 350, and the second OIS actuator 360 disposed in the first camera device 310 according to the embodiment of the present disclosure.

According to the embodiment, with reference to FIG. 6A, the first camera device 310 (e.g., the second camera device 208 in FIG. 2C and/or the camera assembly 263 in FIG. 4) may be disposed in the first housing 210. In the embodiment, the second camera device 410 (e.g., the second camera device 208 in FIG. 2C and/or the camera assembly 263 in FIG. 4) may be disposed between the first magnet M1 and the first camera device 310. In the embodiment, the second camera device 410 and the first camera device 310 may be disposed in parallel based on the folding axis F. For example, the first camera device 310 may be disposed in a first direction (e.g., -X direction in FIG. 6A) with respect to the second camera device 410. Defined differently, the second camera device 410 may be disposed in a second direction (e.g., +X direction in FIG. 6A) that is opposite to the first direction with respect to the first camera device 310.

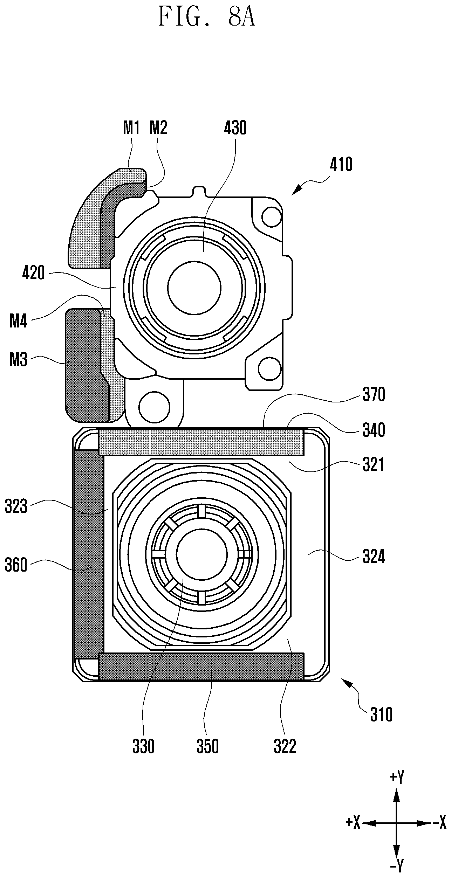

However, the positional relationship between the first camera device 310 and the second camera device 410 may be modified in various ways. Referring to FIGS. 8A to 8D to be described later, the first camera device 310 is disposed in the third direction perpendicular to the first direction with respect to the second camera device 410 (e.g., -Y direction in FIG. 8A).

In the embodiment, the first camera device 310 may include the first lens assembly 330, a first camera housing 320, the AF actuator 340, the first OIS actuator 350, and the second OIS actuator 360. At least one of the above-mentioned components may be excluded, or at least one component may be added.

In the embodiment, with reference to FIG. 6A, the first lens assembly 330 may include at least one lens. In the embodiment, the first lens assembly 330 may be a lens barrel made by assembling one or more lenses. In the embodiment, light introduced through the lens of the first lens assembly 330 may be transmitted to an image sensor of the first camera device 310. In the embodiment, the first lens assembly 330 may be disposed in the first camera housing 320. In the embodiment, the first camera housing 320 may constitute a part of an external appearance of the first camera device 310.

In the embodiment, with reference to FIG. 6A, the second camera device 410 may include a second lens assembly 430 and a second camera housing 420. At least one of the above-mentioned components may be excluded, or at least one component may be added.

In the embodiment, the second lens assembly 430 may include at least one lens. In the embodiment, the second lens assembly 430 may be a lens barrel made by assembling one or more lenses. In the embodiment, light introduced through the lens of the second lens assembly 430 may be transmitted to an image sensor of the second camera device 410. In the embodiment, the second lens assembly 430 may be disposed in the second camera housing 420. In the embodiment, the second camera housing 420 may constitute a part of an external appearance of the second camera device 410.

According to the embodiment, the first camera device 310 may control the AF actuator 340 by means of the processor 120 (e.g., the processor 120 in FIG. 1) to move the first lens assembly 330 in the substantially optical axis direction (e.g., the z-axis in FIG. 5A), thereby performing the AF function for automatically adjusting a focal point of the lens with respect to a subject. In the embodiment, the AF actuator 340 may include the AF coil 342 and the AF magnet 341. In the embodiment, the first lens assembly 330 may adjust the focal point of the lens with respect to the subject while being moved in the optical axis direction by the electromagnetic force applied between the AF coil 342 and the AF magnet 341.

In the embodiment, the electronic device 200 may compensate for the image blur by moving the first lens assembly 330 in a direction opposite to a direction in which the first camera device 310 shakes. In the embodiment, the first camera device 310 may control the first OIS actuator 350 by means of the processor 120 to move the first lens assembly 330 in the first axis direction (e.g., the x-axis direction or the y-axis based on FIG. 6B) substantially perpendicular to the optical axis, thereby performing the optical image stabilizer function for compensating for image blur. In the embodiment, with reference to FIG. 6B, the first OIS actuator 350 may include the first OIS coil 352 and the first OIS magnet 351. In the embodiment, the first lens assembly 330 may compensate for the image blur while being moved in the first axis direction (e.g., the x-axis direction or the y-axis direction based on FIG. 6B) substantially perpendicular to the optical axis by using the electromagnetic force applied between the first OIS coil 352 and the first OIS magnet 351.

In the embodiment, the first camera device 310 may control the second OIS actuator 360 by means of the processor 120 to move the first lens assembly 330 in the second axis direction (e.g., the x-axis or the y-axis direction based on FIG. 6B) perpendicular to the optical axis, thereby performing the optical image stabilizer function for compensating for image blur. In the embodiment, the second axis direction may be substantially perpendicular to the first axis direction, In the embodiment, with reference to FIG. 6B, the second OIS actuator 360 may include the second OIS coil 362 and the second OIS magnet 361. In the embodiment, the second lens assembly 430 may compensate for the image blur while being moved in the second axis direction (e.g., the y-axis direction or the x-axis direction based on FIG. 6B) substantially perpendicular to the optical axis and the first axis by using the electromagnetic force applied between the second OIS coil 362 and the second OIS magnet 361.

In the embodiment, with reference to FIG. 6B, at least a part of the AF actuator 340 may be disposed in the first camera housing 320. For example, at least one of the AF magnet 341 and the AF coil 342 may be disposed in the first camera housing 320. In the embodiment, the first OIS actuator 350 may be spaced apart from the AF actuator 340 in the firstdirection (e.g., the -x-axis direction based on FIG. 6A), and at least a part of the first OIS actuator 350 may be disposed in the first camera housing 320. For example, at least one of the first OIS magnet 351 and the first OIS coil 352 may be disposed in the first camera housing 320. In the embodiment, the second OIS actuator 360 may be spaced apart from the AF actuator 340 in the first direction (e.g., the -x-axis direction based on FIG. 6A), and at least a part of the second OIS actuator 360 may be disposed in the first camera housing 320. For example, at least one of the second OIS magnet 361 and the second OIS coil 362 may be disposed in the first camera housing 320.

In the embodiment, with reference to FIGS. 6A and 6B, the first camera housing 320 may include at least four portions (or surfaces). For example, the first camera housing 320 may include a first portion 321, a second portion 322, a third portion 323, and a fourth portion 324. In the embodiment, the first portion 321 may be a surface of the first camera housing 320 directed in the +x-axis direction based on FIG. 6A and facing at least a part of the first magnet M1 and/or at least a part of the third magnet M3. In the embodiment, the second portion 322 may be a surface opposite to the first portion 321 and directed in the -x-axis direction based on FIG. 6A. The third portion 323 may be a surface of the first camera housing 320 directed in the -y-axis direction based on FIG. 6A and at least partially facing the first lateral member 213 of the first housing 210. The fourth portion 324 may be a surface opposite to the third portion 323 and directed in the +y-axis direction based on FIG. 6A.

In the embodiment, with reference to FIG. 6A, the AF actuator 340 may be disposed on the first portion 321 of the first camera housing 320. In the embodiment, the first OIS actuator 350 may be positioned on the second portion 322 of the first camera housing 320 and face the AF actuator 340. In the embodiment, the second OIS actuator 360 may be positioned on the third portion 323 and disposed between the AF actuator 340 and the first OIS actuator 350. For example, the first OIS actuator 350 may be disposed to be perpendicular to the second OIS actuator 360. In the embodiment, an actuator including a separate magnet and/or a separate coil may not be disposed on the fourth portion 324 of the first camera housing 320. In the embodiment, the first lateral member 213 of the first housing 210, which is connected to a communication module (e.g., the communication module (190)) of a substrate(e.g., the first substrate(261)) and used as an antenna. In the embodiment the magnetic elements (e.g., the AF magnet 341, the AF coil 342, the first OIS coil 352, the first OIS magnet 351, the second OIS coil 362, and the second OIS magnet 361) constituting the actuators 340, 350, and 360 may be spaced apart from lateral member 213. For example, in case that the AF actuator 340, the first OIS actuator 350, and the second OIS actuator 360 are not disposed on the fourth portion 324 of the first camera housing 320 of the first camera device 310, a degree to which a communication signal, which is transmitted to the first lateral member 213 according to antenna radiation of the first lateral member 213, affects the AF function and the OIS function of the first camera device 310 may be reduced, in comparison with a case in which any one of the AF actuator 340, the first OIS actuator 350, and the second OIS actuator 360 is disposed on the fourth portion 324 of the first camera housing 320. Therefore, malfunction of the first camera device 310 can be reduced.

In the embodiment, the positions of the AF actuator 340, the first OIS actuator 350, and the second OIS actuator 360 of the first camera device 310 are not limited to the positions illustrated in FIG. 6A, and the AF actuator 340, the first OIS actuator 350, and the second OIS actuator 360 may be disposed at various positions with respect to the first camera housing 320. In the embodiment, with the AF actuator 340 positioned in the first part 321 of the first camera housing 320 and the first OIS actuator 350 positioned in the second part 322, the second OIS The actuator 360 may be disposed in the fourth portion 324 of the first camera housing 320.

In the embodiment, in the state in which the AF actuator 340 is positioned on the first portion 321 of the first camera housing 320, the first OIS actuator 350 may be positioned in a fourth direction (e.g., the +y-axis direction based on FIG. 6A) with respect to the first lens assembly 330, and the second OIS actuator 360 may be positioned in a third direction (e.g., the -y-axis direction based on FIG. 6A) opposite to the fourth direction with respect to the first lens assembly 330. For example, at least a part of the first OIS actuator 350 may be positioned on the third portion 323 of the first camera housing 320 and disposed in the fourth direction with respect to the first lens assembly 330. At least a part of the second OIS actuator 360 may be positioned on the fourth portion 324 of the first camera housing 320 and disposed in the third direction with respect to the first lens assembly 330.

The above-mentioned description has been described on the premise that the first camera housing 320 has the four surfaces. However, the present disclosure is not limited thereto. In the embodiment, the first camera housing 320 may have a polygonal structure, a circular structure, or a hexahedral structure. However, for convenience of description, the following description will be described on the premise that the first camera housing 320 has a hexahedral shape having four side surfaces, an upper surface, and a lower surface.

According to the embodiment, the electronic device 200 may include a first shield (e.g., yoke) member 370. In the embodiment, with reference to FIG. 6A, the first shield member 370 may be positioned between the first camera device 310 and the second camera device 410. In the embodiment, at least a part of the first shield member 370 may be positioned on the first portion 321 of the first camera housing 320. In the embodiment, when viewing the first part (321) of the first camera housing (320) in the -X direction in FIG. 6B, the first shielding member (370) covers the AF magnet (341) and the AF coil (342). Alternatively, the first shielding member (370) may be overlapped with the AF magnet (341) and the AF coil (342). In the embodiment, the first shield member 370 may be disposed between the first camera device 310 and the second camera device 410.

In the embodiment, the first shield member 370 may reduce an erroneous operation of the first camera device 310 by blocking or reducing electromagnetic waves or external magnetic fields generated outside the first camera device 310. In the embodiment, the first shield member 370 may be made of a material such as iron (Fe), ferrite (ferrite), nano-crystal, or stainless steel. In the embodiment, the first shield member 370 may be a steel plate cold commercial (SPCC). Therefore, the first shield member 370 may prevent the magnetic fields formed by the magnets M1, M2, M3, and M4 from affecting the AF coil 342 and the AF magnet 341 of the AF actuator 340. In addition, the first shield member 370 may prevent the magnetic fields formed by the magnets M1, M2, M3, and M4 from affecting the first OIS coil 352 and the first OIS magnet 351 of the first OIS actuator 350. In addition, the first shield member 370 may prevent the magnetic fields formed by the magnets M1, M2, M3, and M4 from affecting the second OIS coil 362 and the second OIS magnet 361 of the second OIS actuator 360.

According to the embodiment of the present disclosure, the first camera device 310 may be disposed so that the AF actuator 340 is adjacent to the magnets (e.g., the first magnet M1, the second magnet M2, the third magnet M3, and the fourth magnet M4), which provide fixing forces, in the folded state of the electronic device 200. For example, the AF actuator 340 may be disposed on the first portion 321 of the first camera housing 320 directed toward the first magnet M1 and the third magnet M3. Therefore, the first shield member 370 may be disposed in the first camera device 310 and directed toward the first magnet M1 and the third magnet M3. The first shield member 370 may reduce a degree to which the magnetic forces of the first magnet M1 and the third magnet M3 affect the AF actuator 340, the first OIS actuator 350, and the second OIS actuator 360 of the first camera device 310 in the unfolded state of the electronic device 200. In addition, the first shield member 370 may reduce a degree to which the magnetic forces of the first magnet M1, the second magnet M2 the third magnet M3, and the fourth magnet M4 affect the AF actuator 340, the first OIS actuator 350, and the second OIS actuator 360 of the first camera device 310 in the folded state of the electronic device 200. Therefore, because the AF actuator 340 is positioned on the first portion 321 of the first camera housing 320 of the first camera device 310, it is possible to prevent or reduce an erroneous operation of the AF actuator 340, an erroneous operation of the first OIS actuator 350, and an erroneous operation of the second OIS actuator 360, which are caused by the magnets, thereby reducing the deterioration in performance of the first camera device 310. In this case, the performance of the first camera device 310 may include an error rate of the AF actuator 340, an error rate of the first OIS actuator 350, an error rate of the second OIS actuator 360, an EM force of the AF actuator 340, an EM force of the first OIS actuator 350, and an EM force of the second OIS actuator 360 that will be described with reference to Tables 2, 3 and 4 below. Therefore, the reduction in deterioration in performance of the first camera device 310 may reduce the error rate and the EM force.

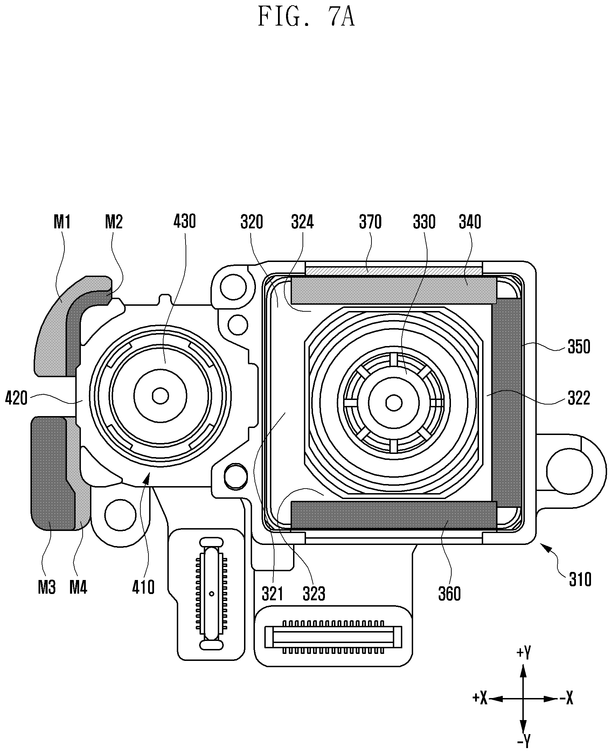

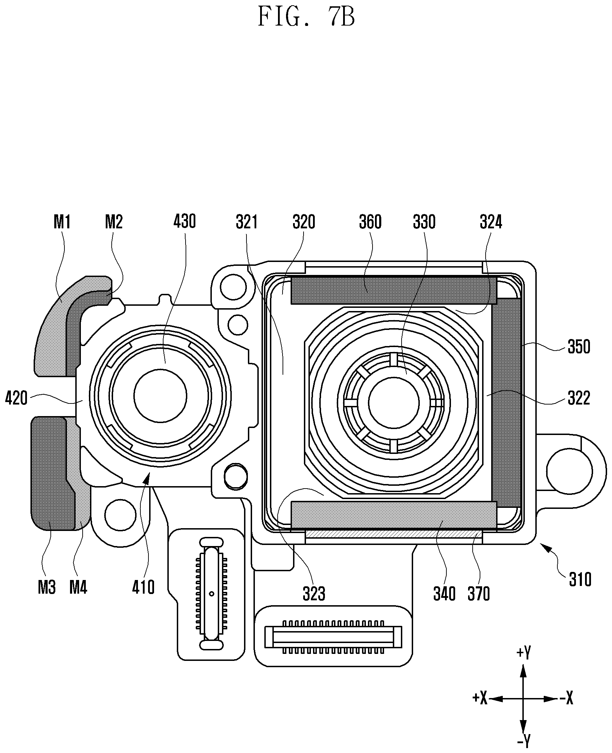

FIGS. 7A and 7B are views for explaining the AF actuator disposed in the camera housing so as not to face the first magnet when the electronic device is in a folded state.

According to the embodiment, with reference to FIG. 7A and 7B, the AF actuator 340, the first OIS actuator 350, and the second OIS actuator 360 may not be disposed on the first portion of the first camera device 310 directed toward the first magnet M1 and/or the third magnet M3. In the embodiment, with reference to FIG. 7A and 7B, the first portion 321 of the first camera housing 320 may face the first magnet M1 and/or the third magnet M3. In the embodiment the AF actuator 340, the first OIS actuator 350, and the second OIS actuator 360 may not be disposed on the first portion 321 of the first camera housing 320. In the embodiment, the AF actuator 340 may be disposed on any one of the second portion 322, the third portion 323, and the fourth portion 324 of the first camera housing 320. The first OIS actuator 350 may be disposed on a portion of the first camera housing 320 on which the AF actuator 340 is not disposed among the second portion 322, the third portion 323, and the fourth portion 324. The second OIS actuator 360 may be disposed on a portion of the first camera housing 320 on which the AF actuator 340 and the first OIS actuator 350 are not disposed among the second portion 322, the third portion 323, and the fourth portion 324.

In the embodiment, with reference to FIG. 7A, the AF actuator 340 may be disposed on the fourth portion 324 of the first camera housing 320, the first OIS actuator 350 may be disposed on the second portion 322 of the first camera housing 320, and the second OIS actuator 360 may be disposed on the third portion 323 of the first camera housing 410. In case that the AF actuator 340 is disposed on the fourth portion 324 of the first camera housing 320, the first shield member 370 is positioned adjacent to the fourth portion 324 of the first camera housing 320, which may reduce a degree to which an antenna signal of the first lateral member 213 affects the performance of the first camera device 310.

In the embodiment, with reference to FIG. 7B, the AF actuator 340 is disposed in the third portion 323 of the first camera housing 320, the first OIS actuator 350 is disposed in the second portion 322 of the first camera housing 320, and the second OIS actuator 360 is disposed in the fourth portion 324 of the first camera housing 320 .In addition, the AF actuator 340, the first OIS actuator 350, and the second OIS actuator 360 may be disposed on various positions, except for the first portion 321 of the first camera housing 320. For example, the AF actuator (340) is disposed in the second portion (322) of the first camera housing (320), while the first OIS actuator (350) and the second OIS actuator (360) are disposed in the third portion (323) and the fourth part (324), respectively. Therefore, the actuators of the first camera device 310 may be spaced apart from the magnets M1, M2, M3, and M4 in comparison with the case in which the actuator is disposed on the first portion 321 of the first camera housing 320. Therefore, the influence of the magnetic fields formed by the magnets M1, M2, M3, and M4 may be reduced, which may reduce erroneous operations of the AF actuator 340, the first OIS actuator 350, and the second OIS actuator 360.

For convenience of description, the following description will be described on the premise that the AF actuator 340 is disposed on the first portion 321 of the first camera housing 320. However, the following description will be equally applied to the embodiment in which the AF actuator 340, the first OIS actuator 350, and the second OIS actuator 360 are not disposed on the first portion 321 of the first camera housing 320.

In the embodiment, the first OIS actuator 350 may include a first OIS magnet detection sensor 353. The first OIS magnet detection sensor 353 may include at least one drive IC (not illustrated). In the embodiment, the first OIS magnet detection sensor 353 may detect a movement amount of the first lens assembly 330 in the first axis direction by detecting the amount in which the first lens assembly 330 is moved in the first axis direction (e.g., the x-axis direction in FIG. 6B) by the first OIS actuator 350. In the embodiment, the first OIS magnet detection sensor 353 may detect a movement amount of the first lens assembly 330 in the second axis direction in case that the first lens assembly 330 is moved in the second axis direction (e.g., the y-axis direction in FIG. 6B) by the first OIS actuator 350.

In the embodiment, the second OIS actuator 360 may include a second OIS magnet detection sensor 363. The second OIS magnet detection sensor 363 may include at least one drive IC (not illustrated). In the embodiment, the second OIS magnet detection sensor 363 may detect a movement amount of the second lens assembly 430 in the second axis direction by detecting the amount in which the second lens assembly 430 is moved in the second axis direction (e.g., the y-axis direction in FIG. 6B) by the second OIS actuator 360. In the embodiment, the second OIS magnet detection sensor 363 may detect a movement amount of the first lens assembly 330 in the first axis direction in case that the second lens assembly 430 is moved in the first axis direction (e.g., the x-axis direction in FIG. 6B) by the second OIS actuator 360.

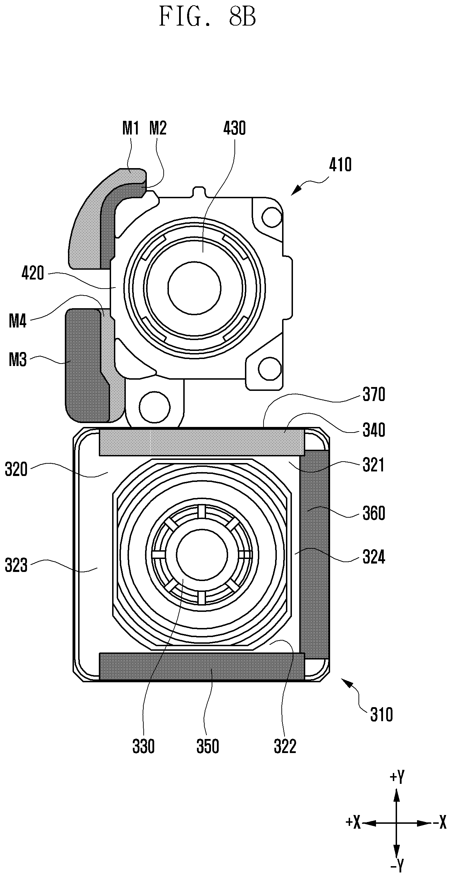

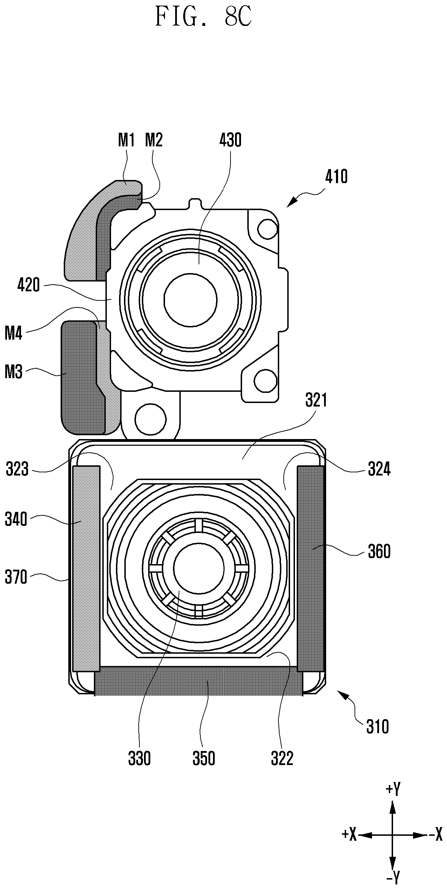

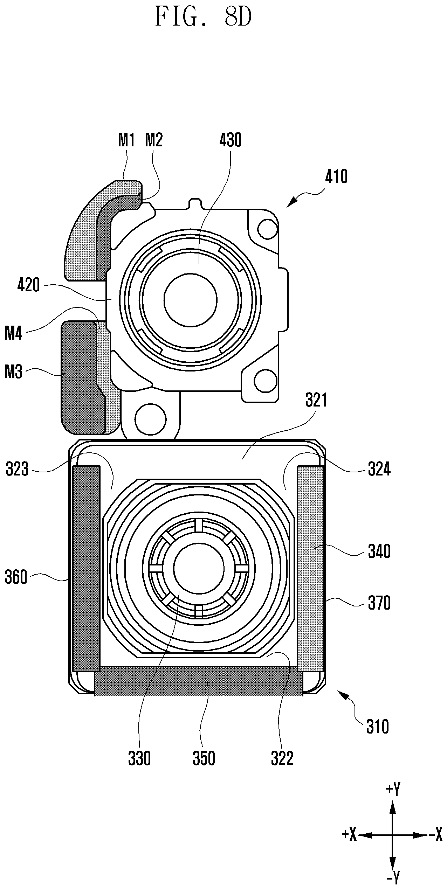

Figures 8a and 8b are views for explaining the AF actuator is disposed in the camera housing to face the first magnet when the electronic device is in a folded state. Figures 8c and 8d are views for explaining the AF actuator is disposed in the camera housing so as not to face the first magnet when the electronic device is in a folded state.

In the embodiment, the arrangement relationship of the first camera device (310) and the second camera device (410) shown in FIGS. 8A to 8D may differ from the arrangement relationship of the first camera device (310) and the second camera device (410) shown in FIGS. 6A to 7B.

In the embodiment, as shown in FIGS. 8A to 8D, the first camera device (310) and the second camera device (410) may be disposed side by side along the Y-axis of FIG. 8A in the first housing (210). In the embodiment, the first camera device (310) may be disposed in the third direction (e.g., -Y direction of FIG. 8A) with respect to the first magnet (M1). The second camera device (410) may be disposed between the first camera device (310) and the first magnet (M1). For example, the second camera device (410) may be disposed in the fourth direction (e.g., +Y direction of FIG. 8A) opposite to the third direction with respect to the first camera device (310).

In the embodiment, with reference to FIG. 8A, the AF actuator (340) may be disposed in the first portion (321) of the first camera housing (320). In the embodiment, the first OIS actuator (350) may be positioned in the second portion (322) of the first camera housing (320) facing the AF actuator (340). In the embodiment, the second OIS actuator (360) may be positioned in the third portion (323) and be disposed between the AF actuator (340) and the first OIS actuator (350). For example, the first OIS actuator (350) may be disposed perpendicular to the second OIS actuator (360). In the embodiment, an actuator including a separate magnet and/or coil may not be disposed in the fourth portion 324 of the first camera housing 320.

In the embodiment, with reference to FIG. 8B, the AF actuator (340) may be disposed in the first portion (321) of the first camera housing (320). The first OIS actuator (350) may be disposed in the second portion (322) of the first camera housing (320). The second OIS actuator (360) may be disposed in the fourth portion (324) of the first camera housing (320). In the embodiment, an actuator including a separate magnet and/or coil may not be disposed in the third portion 323 of the first camera housing 320. In addition, with the AF actuator 340 disposed in the first portion 321 of the first camera housing 320, the first OIS actuator 350 may be disposed in the third portion 323 of the first camera housing 320 and the second OIS actuator 360 may be disposed in the fourth portion 324 of the first camera housing 320.

In the embodiment, as shown in FIGS. 8C and 8D, the AF actuator (340), the first OIS actuator (350), and the second OIS actuator (360) may not be disposed in the portion of the first camera device (310) facing the first magnet (M1) and/or the third magnet (M3). In the embodiment, when the first camera device (310) is disposed in the first housing (210), the first portion (321) of the first camera housing (320) may be face the first magnet (M1) and/or the third magnet (M3). In the embodiment, the AF actuator (340), the first OIS actuator (350), and the second OIS actuator (360) may not be disposed in the first portion (321) of the first camera housing (320). In the embodiment, the AF actuator (340) may be disposed in any of the second portion (322), third portion (323), and fourth portion (324) of the first camera housing (320). The first OIS actuator (350) may be disposed in the portion of the first camera housing (320) where the AF actuator (340) is not disposed among the second portion (322), third portion (323), and fourth portion (324). The second OIS actuator (360) may be disposed in the portion of the first camera housing (320) where neither the AF actuator (340) nor the first OIS actuator (350) is disposed among the second portion (322), third portionn (323), and fourth portion (324).

In the embodiment, referring to FIG. 8C, the AF actuator (340) is disposed in the third portiion (323) of the first camera housing (320), the first OIS actuator (350) is is disposed in the second portion (322) of the first camera housing (320), and the second OIS actuator (360) is disposed in the fourth portion (324) of the first camera housing (320). When the AF actuator (340) is disposed in the third portion (323) of the first camera housing (320), the first shielding member (370) may be disposed in the third portion (323) of the first camera housing (320).

In the embodiment, with reference to FIG. 8D, the AF actuator (340) is dispsoed in the fourth portion (324) of the first camera housing (320), the first OIS actuator (350) is disposed in the second portion (322) of the first camera housing (320), and the second OIS actuator (360) may be disposed in the third portion (323) of the first camera housing (320). Additionally, the AF actuator (340), the first OIS actuator (350), and the second OIS actuator (360) may be disposed in various positions excluding the first portion (321) of the first camera housing (320). Therefore, the actuators (340, 350, 360) of the first camera device (310) may be spaced apart from the magnets (M1, M2, M3, M4) compared to when they are disposed in the first part (321) of the first camera housing (320). Consequently, the influence of the magnetic fields formed by the magnets (M1, M2, M3, M4) is reduced, thereby decreasing the malfunction of the AF actuator (340), the first OIS actuator (350), and the second OIS actuator (360).

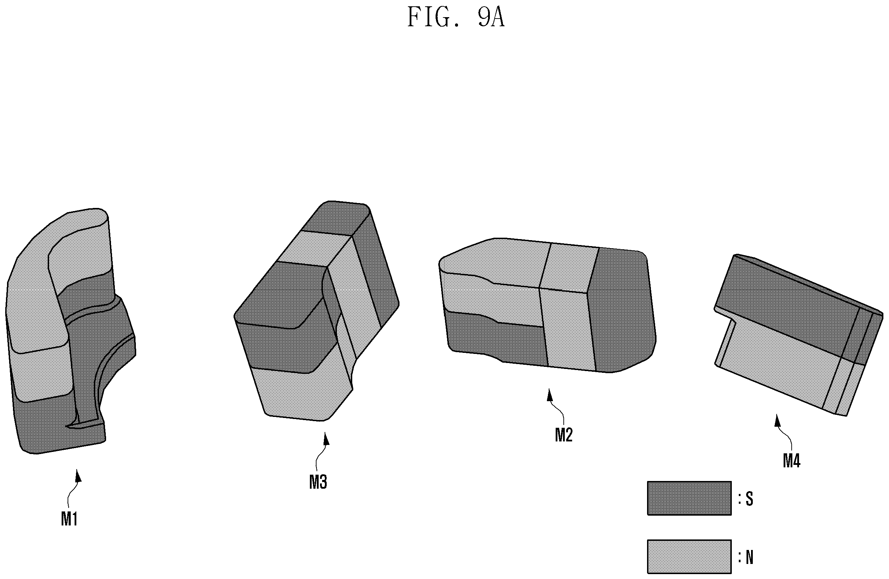

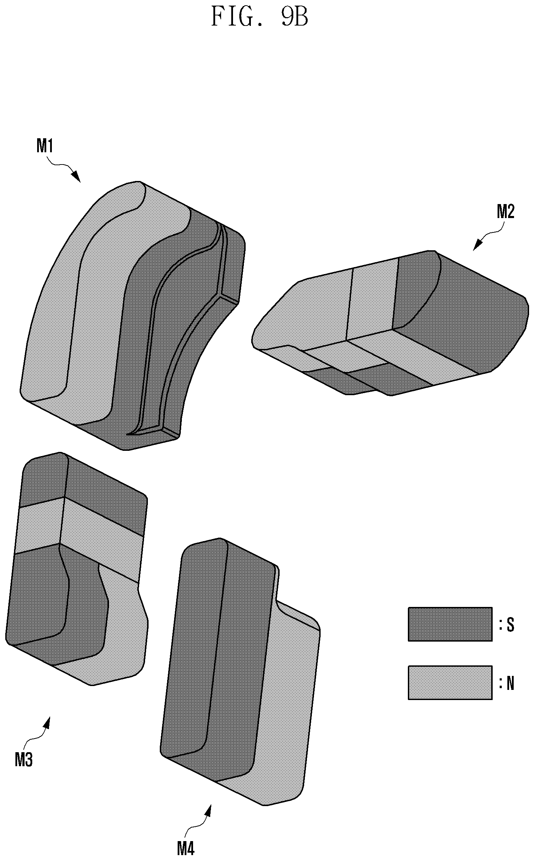

Figures 9A and 9B are views for explaining the magnets disposed in the first housing and the second housing according to an embodiment of the present disclosure.

According to the embodiment, as illustrated in FIGS. 9A and 9B, the first magnet M1, the second magnet M2, the third magnet M3, and the fourth magnet M4 may be formed in various shapes.

In the embodiment, with reference to FIGS. 6A, 9A, and 9B, at least a part of the first magnet M1 disposed in the first housing 210 may face the AF actuator 340. At least a part of the third magnet M3 disposed in the first housing 210 may face the AF actuator 340 and the second OIS actuator 360. In the embodiment, in the folded state of the electronic device 200, at least a part of the second magnet M2 disposed in the second housing 220 may face the first magnet M1. In addition, in the folded state of the electronic device 200, at least a part of the fourth magnet M4 disposed in the second housing 220 may face the third magnet M3. In the embodiment, with reference to FIG. 6A, in the folded state of the electronic device 200, the second magnet M2 may be closer to the AF actuator 340 and the first OIS actuator 350 than the fourth magnet M4 to the AF actuator 340 and the first OIS actuator 350. Therefore, in the folded state of the electronic device 200, the intensity of the magnetic field applied to the first camera device 310 by the second magnet M2 may be higher than the intensity of the magnetic field applied to the first camera device 310 by the fourth magnet M4.

In the embodiment, among the first magnet M1, the second magnet M2, the third magnet M3, and the fourth magnet M4, a magnet, which less affects the performance (e.g., the AF function and the OIS function) of the first camera device 310, may be configured as a single-pole magnet including a single N-pole and a single S-pole. For example, among the first magnet M1, the second magnet M2, the third magnet M3, and the fourth magnet M4, a magnet, which faces the AF actuator 340 and is spaced apart from the first OIS actuator 350 and the second OIS actuator 360 by a relatively long distance, may be configured as a single-pole magnet. For example, the first magnet M1, which faces the AF actuator 340, may be a single-pole magnet. In addition, the fourth magnet M4, which has a lower intensity of the magnetic field, which affects the first camera device 310 in the folded state of the electronic device 200, than the second magnet M2 may be a single-pole magnet.

In the embodiment, with reference to FIGS. 6A, 9A, and 9B, the third magnet M3 disposed in the first housing 210 faces the AF actuator 340 and the second OIS actuator 360, such that the third magnet M3 may have a higher intensity of the magnetic field, which affects the first camera device 310, than the first magnet M1. Therefore, the third magnet M3 may be configured as a multi-pole magnet including at least two N-poles and at least two S-poles. In the embodiment, the third magnet M3 may be a magnet having a Halbach array. In the embodiment, the multi-pole magnet may be smaller in amount of magnetic flux, which is discharged to the outside of the magnet, than the single-pole magnet. Therefore, in comparison with the single-pole magnet, the multi-pole magnet may less affect the surrounding magnetic element (e.g., the AF actuator 340, the first OIS actuator 350, and the second OIS actuator 360). Therefore, because the third magnet M3, which has a higher intensity of the magnetic field affecting the first camera device 310 than the first magnet M1, is configured as the multi-pole magnet, it is possible to reduce a degree to which the magnetic field of the third magnet M3 affects the first camera device 310, thereby preventing or reducing the deterioration in performance of the first camera device 310.

Meanwhile, the single-pole magnet may be larger in amount of magnetic flux, which is discharged to the outside of the magnet, than the multi-pole magnet. In this case, an attractive force between the single-pole magnet and the single-pole magnet (or the multi-pole magnet) may be higher than an attractive force between the multi-pole magnets. Therefore, the first magnet (M1), which has a lower magnetic field intensity on the first camera device (310) compared to the third magnet (M3), can be configured as a single-pole magnet. When the electronic device (200) is in a folded state, the single-pole magnet (first magnet M1) and the multi-pole magnet (third magnet M3) face each other. The single-pole magnet (first magnet M1) can provide sufficient holding force to maintain the folded state of the first housing (210) and the second housing (220).

In the embodiment, with reference to FIGS. 6A, 9A, and 9B, the second magnet M2 may be closer to the AF actuator 340 and the first OIS actuator 350 than the fourth magnet M4 to the AF actuator 340 and the first OIS actuator 350. In this case, in the folded state of the electronic device 200, the intensity of the magnetic field applied to the first camera device 310 by the second magnet M2 may be higher than the intensity of the magnetic field applied to the first camera device 310 by the fourth magnet M4. Therefore, the second magnet M2 may be configured as a multi-pole magnet including at least two N-poles and at least two S-poles. In the embodiment, the second magnet M2 may be a magnet having a Halbach magnet array. Therefore, because the second magnet M2, which has a higher intensity of the magnetic field affecting the first camera device 310 than the four magnet M4, is configured as the multi-pole magnet, it is possible to reduce a degree to which the magnetic field of the second magnet M2 affects the first camera device 310, thereby preventing or reducing the deterioration in performance of the first camera device 310.

Meanwhile, in the folded state of the electronic device 200, the fourth magnet M4 is farther from the first camera device 310 than the second magnet M2 from the first camera device 310, such that the fourth magnet M4 may have a lower intensity of the magnetic field, which affects the first camera device 310, than the second magnet M2. Therefore, the fourth magnet (M4), which has a lower magnetic field intensity on the first camera device (310) compared to the second magnet (M2), can be configured as a single-pole magnet. When the electronic device (200) is in a folded state, the single-pole magnet (fourth magnet M4) and the multi-pole magnet (second magnet M2) face each other. The single-pole magnet (fourth magnet M4) can provide sufficient holding force to maintain the folded state of the first housing (210) and the second housing (220).

In the embodiment, as shown in Table 1 below, at least one of the magnets (M1, M2, M3, M4) adjacent to the camera devices (310, 410) can be formed as a multi-pole magnet. The magnets (M1, M2, M3, M4) can be formed as either single-pole or multi-pole magnets, considering the intensity of the magnetic field affecting the first camera device (310) and the strength of the attraction between the magnets facing each other when the electronic device (200) is in a folded state. The following Case 1 is an embodiment where all magnets (M1, M2, M3, M4) are formed as multi-pole magnets. Case 2 is an embodiment where three of the magnets (M1, M2, M3, M4) are formed as multi-pole magnets and the remaining one is formed as a single-pole magnet. Case 3 is an embodiment where two of the magnets (M1, M2, M3, M4) are formed as multi-pole magnets, and the remaining two are formed as single-pole magnets. Case 4 is an embodiment where three of the magnets (M1, M2, M3, M4) are formed as single-pole magnets, and the remaining one is formed as a multi-pole magnet. Although the above assumes that there are four magnets placed adjacent to the camera devices (310, 410), this is not limiting, and the number of magnets adjacent to the camera devices (310, 410) can be configured to be more or less than four.

**[Table 1]**

| | the first magnet(Ml) | the second magnet(M2) | the third magnet(M3) | the fourth magnet(M4) |
|---|---|---|---|---|
| Case 1 | multi-pole magnet | multi-pole magnet | multi-pole magnet | multi-pole magnet |
| Case 2 | single-pole magnet | multi-pole magnet | multi-pole magnet | multi-pole magnet |
| | multi-pole magnet | single-pole magnet | multi-pole magnet | multi-pole magnet |
| | multi-pole magnet | multi-pole magnet | single-pole magnet | multi-pole magnet |
| | multi-pole magnet | multi-pole magnet | multi-pole magnet | single-pole magnet |
| Case 3 | single-pole magnet | single-pole magnet | multi-pole magnet | multi-pole magnet |
| | single-pole magnet | multi-pole magnet | single-pole magnet | multi-pole magnet |
| | single-pole magnet | multi-pole magnet | multi-pole magnet | single-pole magnet |
| | multi-pole magnet | single-pole magnet | single-pole magnet | multi-pole magnet |
| | multi-pole magnet | single-pole magnet | multi-pole magnet | single-pole magnet |
| | multi-pole magnet | multi-pole magnet | single-pole magnet | single-pole magnet |
| Case 4 | multi-pole magnet | single-pole magnet | single-pole magnet | single-pole magnet |
| | single-pole magnet | multi-pole magnet | single-pole magnet | single-pole magnet |
| | single-pole magnet | single-pole magnet | multi-pole magnet | single-pole magnet |
| | single-pole magnet | single-pole magnet | single-pole magnet | multi-pole magnet |

In the embodiment, with reference to Table 2 below, it is possible to identify the error rate of the AF function and the OIS function of the first camera device 310 and the intensity (electromagnetic (EM) force), which is required to operate the actuator of the first camera device 310, depending on which magnet is the single-pole magnet or the multi-pole magnet among the first magnet M1, the second magnet M2, the third magnet M3, and the fourth magnet M4 in the folded state of the electronic device 200. The experiment related to Table 2 is based on the premise that the AF actuator 340, the first OIS actuator 350, and the second OIS actuator 360 have the positional relationships in FIG. 6A. In addition, in the embodiment, in Table 2, Case 1 is a case in which the first to fourth magnets M1, M2, M3, and M4 are single-pole magnets, Case 2 is a case in which the first to fourth magnets M1, M2, M3, and M4 are multi-pole magnets, Case 3 is a case in which the first magnet M1 is a single-pole magnet, and the second to fourth magnets M2, M3, and M4 are multi-pole magnets, Case 4 is a case in which the third magnet M3 is a single-pole magnet, and the first magnet M1, the second magnet M2, and the fourth magnet M4 are multi-pole magnets, and Case 5 is a case in which the fourth magnet M4 is a single-pole magnet, and the first to third magnets M1, M2, and M3 are multi-pole magnets. In addition, in Table 2, 'AF' may mean the AF actuator 340, 'First OIS' may mean the first OIS actuator 350, and 'Second OIS' may mean the second OIS actuator 360.

**[Table 2]**

| | | | | | | Case 1 | | Case 2 | | Case 3 | | Case 4 | | Case 5 | |
|---|---|---|---|---|---|---|---|---|---|---|---|---|---|---|---|
| List | AF | Second OIS | First OIS | AF | Second OIS | First OIS | AF | Second OIS | First OIS | AF | Second OIS | First OIS | AF | Second OIS | First OIS |
| Error rate (%) | 1.2 | 1.6 | 1.1 | 0 | 1.4 | 1.3 | 0.4 | 1.4 | 0.5 | 0 | 1.4 | 1.1 | 0.4 | 1.5 | 0.9 |
| EM force (mN) | 1.5 | 0 | 1.5 | 0 | 1.4 | 1.1 | 0.4 | 1.4 | 0.5 | 0 | 1.4 | 1.1 | 0.4 | 1.5 | 0.9 |

In the embodiment, with reference to Table 2, it can be ascertained that in Case 3 in which only the first magnet M1 is the single-pole magnet and Case 5 in which only the fourth magnet M4 is the single-pole magnet, the error rates of the AF actuator 340, the first OIS actuator 350, and the second OIS actuator 360 are low on average, and the EM force is low on average. In the embodiment, the EM forces may be forces required to operate the AF actuator 340, the first OIS actuator 350, and the second OIS actuator 360. Therefore, as the EM force decreases, the power consumption required to operate the AF actuator 340, the first OIS actuator 350, and the second OIS actuator 360 may decrease. Therefore, according to the experimental result shown in Table 2 according to the embodiment of the present disclosure, when the first magnet M1 or the fourth magnet M4 is the single-pole magnet, the error rates of the AF actuator 340, the first OIS actuator 350, and the second OIS actuator 360 may be low, and the power consumption required to operate the AF actuator 340, the first OIS actuator 350, and the second OIS actuator 360 may be low.

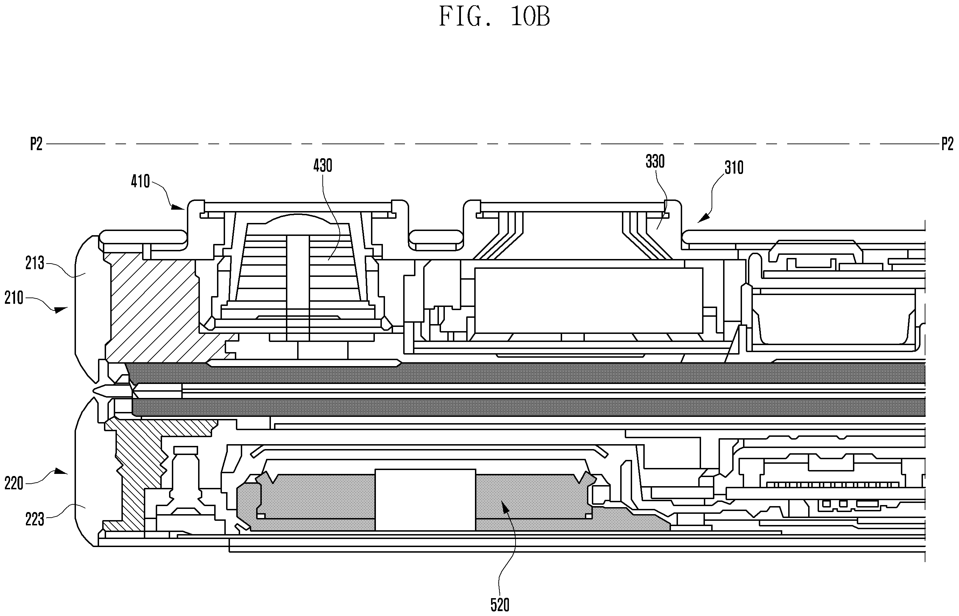

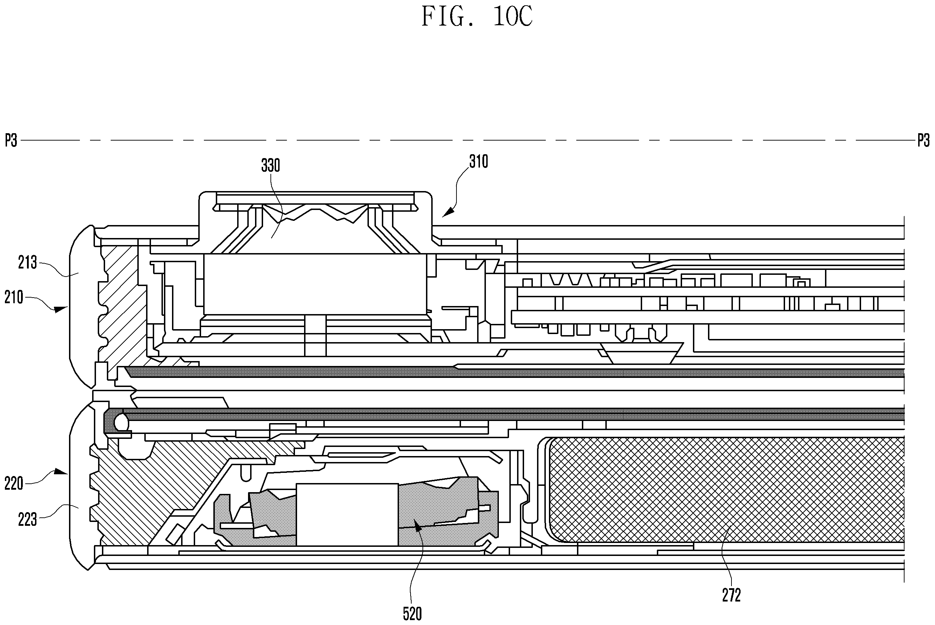

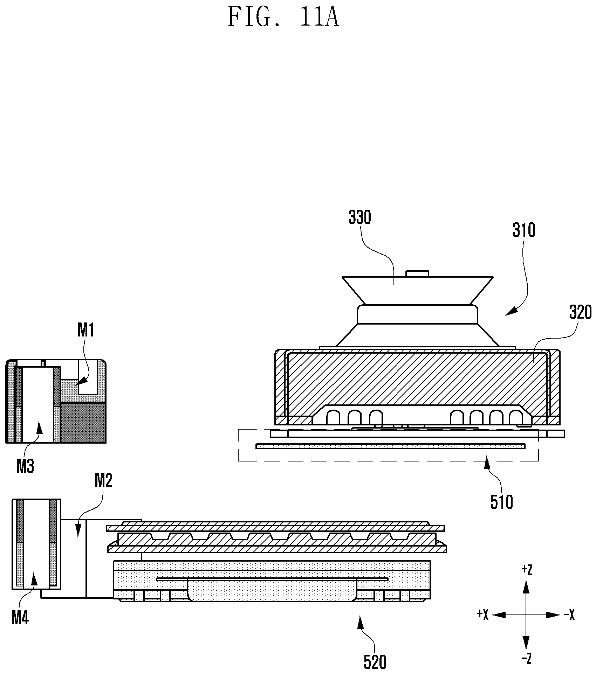

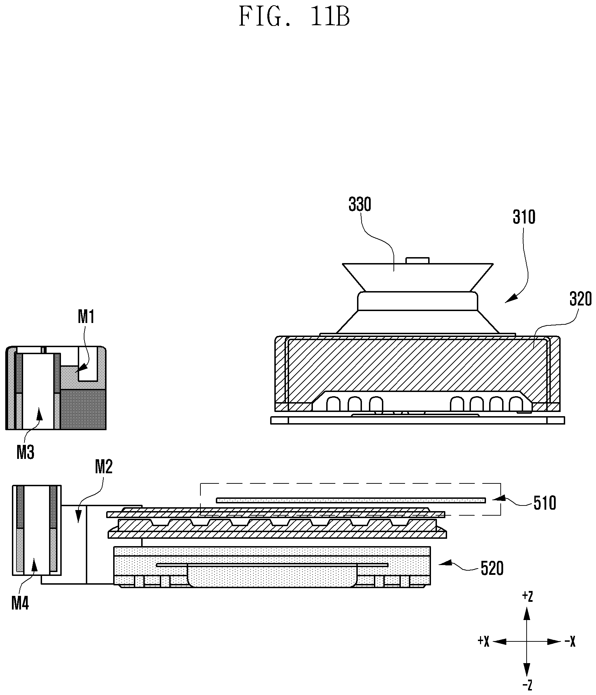

FIG. 10A is a cross-sectional view taken along line P1-P1 in FIG. 5D according to the embodiment of the present disclosure. FIG. 10B is a cross-sectional view taken along line P2-P2 in FIG. 5D according to the embodiment of the present disclosure. FIG. 10C is a cross-sectional view taken along line P3-P3 in FIG. 5D according to the embodiment of the present disclosure. FIG. 11A is a view illustrating a state in which the second shield member 510 is disposed between the first display 230 and the first camera device 310 in the state in which the electronic device 200 according to the embodiment of the present disclosure is folded. FIG. 11B is a view illustrating a state in which the second shield member 510 is disposed between the first display 230 and the speaker module 520 in the state in which the electronic device 200 according to the embodiment of the present disclosure is folded.

According to the embodiment, as illustrated in FIGS. 10A, 10B, and 10C, in the folded state of the electronic device 200, the first camera device 310 disposed in the first housing 210 may at least partially face the electronic component disposed in the second housing 220. In the embodiment, the electronic component disposed in the second housing 220 may be the second speaker module 520 (e.g., the sound output device 202). However, the electronic components, which are disposed in the second housing 220 and face the first camera device 310, may be various electronic components in addition to the second speaker module 520. The following description will be described on the premise that the electronic component, which is disposed in the second housing 220 and faces the first camera device 310, is the second speaker module 520.

According to the embodiment, as illustrated in FIG. 10A, in the folded state of the electronic device 200, the second speaker module 520 may be positioned in the first direction (e.g., the -x-axis direction based on FIG. 10A) with respect to the second magnet M2 or the fourth magnet M4 and at least partially face the first camera device 310. In the folded state of the electronic device 200, the second speaker module 520 may be disposed adjacent to the first camera device 310 and affect the performance of the first camera device 310. For example, because the first camera device 310 is disposed adjacent to the second speaker module 520, which is the magnetic element, in the folded state of the electronic device 200, the performance of the first camera device 310 may be degraded by the magnetic field formed by the second speaker module 520.

According to the embodiment, as illustrated in FIGS. 11A and 11B, the second shield member may be disposed between the second speaker module 520 and the first camera device 310 in the folded state of the electronic device 200. In the embodiment, the second shield member 510 may block or reduce the transmission of electromagnetic waves or magnetic fields generated by the second speaker module 520 to the first camera device 310, thereby reducing an erroneous operation of the first camera device 310. In the embodiment, the second shield member 510 may be made of a magnetic material having high magnetic permeability to block the magnetic field. For example, the second shield member 510 may be made of a material such as iron (Fe), ferrite (ferrite), nano-crystal, or stainless steel. In the embodiment, the second shield member 510 may be a steel plate cold commercial (SPCC).

According to the embodiment, the second shield member 510 may be disposed at various positions and block or reduce the transmission of electromagnetic waves or magnetic fields generated by the second speaker module 520 to the first camera device 310. In the embodiment, with reference to FIG. 11A, the second shield member 510 may be disposed between the first display 230 and the first camera device 310. For example, the second shield member 510 may be disposed on the rear surface (e.g., the surface directed in the -z-axis direction based on FIG. 11A) of the first camera housing 320 of the first camera device 310 or disposed on a part of the first display 230 that faces the first camera device 310. In the embodiment, with reference to FIG. 11B, the second shield member 510 may be disposed between the first display 230 and the second speaker module 520 in the second housing 220. For example, the second shield member 510 may be disposed in a speaker housing of the second speaker module 520 or disposed on a part of the first display 230 that faces the second speaker module 520.

In the embodiment, with reference to Table 3 below, it is possible to identify the error rate of the AF function and the OIS function of the first camera device 310 and the intensity (electromagnetic (EM) force), which is required to operate the actuator of the first camera device 310, depending on whether the second shield member 510 is disposed between the first camera device 310 and the second speaker module 520 in the state in which the first magnet M1 is the single-pole magnet and the second magnet M2, the third magnet M3, and the fourth magnet M4 are the multi-pole magnets in the folded state of the electronic device 200.

The experiment related to Table 3 is based on the premise that the AF actuator 340, the first OIS actuator 350, and the second OIS actuator 360 have the positional relationships in FIGS. 10A, 11A, and 11B. For example, Case 1 is premised on the positional relationships between the components illustrated in FIGS. 6A and 10A, Case 2 is premised on the positional relationships between the components illustrated in FIG. 11A, and Case 3 is premised on the positional relationships between the components illustrated in FIG. 11B. In addition, in Table 3, 'AF' may mean the AF actuator 340, 'First OIS' may mean the first OIS actuator 350, and 'Second OIS' may mean the second OIS actuator 360.

**[Table 3]**

| | Case 1 | | | Case 2 | | | Case 3 | | |
|---|---|---|---|---|---|---|---|---|---|
| List | AF | Second OIS | First OIS | AF | Second OIS | First OIS | AF | Second OIS | First OIS |
| Error rate (%) | 0.4 | 1.4 | 0.5 | 0.3 | 1.2 | 0.8 | 0.2 | 1.1 | 0.5 |
| EM force (mN) | 1.3 | 0.1 | 0.5 | 1.9 | 0.6 | 0.8 | 1.5 | 0.4 | 1.2 |

In the embodiment, with reference to Table 3, as illustrated in FIG. 11B, it can be ascertained that when the second shield member 510 is positioned on the upper surface of the second speaker module 520, the error rates of the AF actuator 340, the first OIS actuator 350, and the second OIS actuator 360 are low in comparison with Cases 1 and 2.

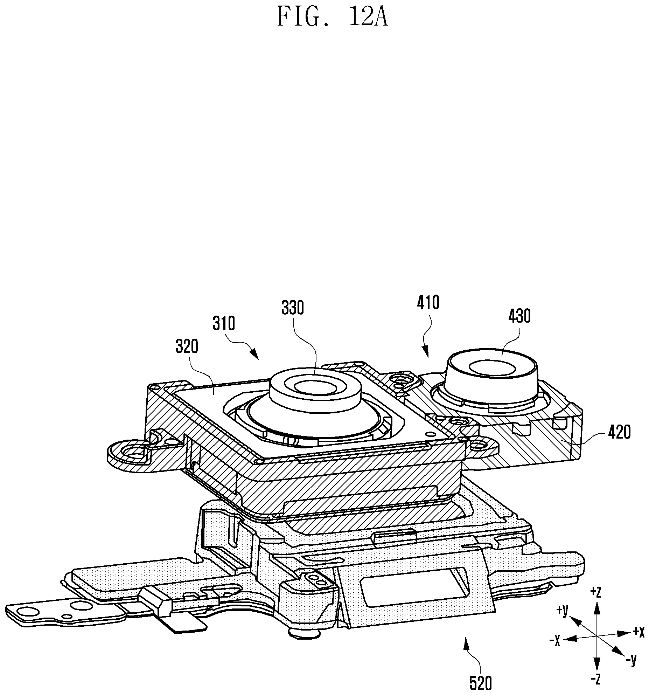

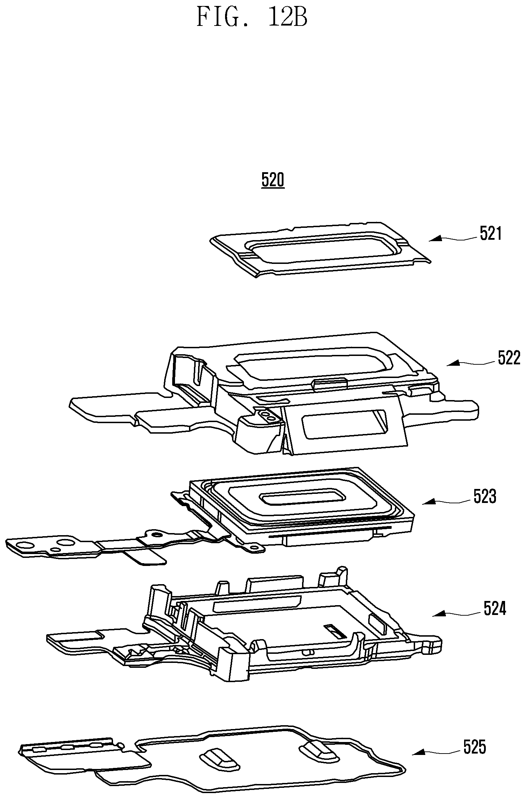

FIG. 12A is a view illustrating a state in which the first and second camera devices 310 and 410 disposed in the first housing 210 and the second speaker module 520 disposed in the second housing 220 at least partially face one another in the state in which the electronic device 200 according to the embodiment of the present disclosure is folded. FIG. 12B is an exploded perspective view of the speaker module 520 in FIG. 12A.

According to the embodiment, as illustrated in FIG. 12A, the second speaker module 520 and the first camera device 310 may at least partially face each other in the folded state of the electronic device 200. In the embodiment, with reference to FIG. 12B, a first reinforcement plate 521 - a first bracket 522 - a speaker main body 523 - a second bracket 524 - a second reinforcement plate 525 of the second speaker module 520 may be stacked in this order. In the embodiment, because the speaker main body 523 of the second speaker module 520 is configured as a magnetic element, the performance of the first camera device 310 may be degraded in the folded state of the electronic device 200.

In the embodiment, a component, which is adjacent to the speaker main body 523 among the components of the second speaker module 520, may block the magnetic force of the speaker main body 523. For example, the first reinforcement plate 521 may be the second shield member 510. In the embodiment, the first bracket 522, which is positioned between the speaker main body 523 and the first camera device 310, may block or reduce the transmission of the magnetic force of the speaker main body 523 to the first camera device 310.

In the embodiment, with reference to Table 4 below, it is possible to identify the error rate of the AF function and the OIS function of the first camera device 310 and the intensity (electromagnetic (EM) force), which is required to operate the actuator of the first camera device 310, depending on which magnet is the single-pole magnet or the multi-pole magnet among the first magnet M1, the second magnet M2, the third magnet M3, and the fourth magnet M4 and whether the first reinforcement plate of the second speaker module 520 is the second shield member 510 in the folded state of the electronic device 200.

The experiment related to Table 4 is based on the premise that the AF actuator 340, the first OIS actuator 350, and the second OIS actuator 360 have the positional relationships in FIGS. 6A, 10A, and 10B.

In Table 4, Case 1 is premised on the positional relationships between the components illustrated in FIGS. 6A and 10A and based on the premise that the first magnet M1 is the single-pole magnet and the second to fourth magnets M2, M3, and M4 are the multi-pole magnets in the state in which the second shield member 510 is not disposed between the second speaker module 520 and the first camera device 310. Case 2 is based on the premise that the first reinforcement plate 521 of the second speaker module 520 is the second shield member 510, and the first to fourth magnets M1, M2, M3, and M4 are the multi-pole magnets. Case 3 is based on the premise that the first reinforcement plate 521 of the second speaker module 520 is the second shield member 510, the first magnet M1 is the single-pole magnet, and the second to fourth magnets M2, M3, and M4 are the multi-pole magnets. Case 4 is based on the premise that the first reinforcement plate 521 of the second speaker module 520 is the second shield member 510, the first magnet M1 and the fourth magnet M4 are the single-pole magnets, and the second magnet M2 and the third magnet M3 are the multi-pole magnets.

In addition, in Table 4, 'AF' may mean the AF actuator 340, 'First OIS' may mean the first OIS actuator 350, and 'Second OIS' may mean the second OIS actuator 360.

**[Table 4]**

| | Case 1 | | | Case 2 | | | Case 3 | | | Case 4 | | |
|---|---|---|---|---|---|---|---|---|---|---|---|---|
| List | AF | Second OIS | First OIS | AF | Second OIS | First OIS | AF | Second OIS | First OIS | AF | Second OIS | First OIS |
| Error rate (%) | 0.4 | 1.4 | 0.5 | 0.1 | 0.3 | 0.5 | 0.3 | 1.0 | 0.8 | 0.3 | 1.1 | 0.7 |
| EM force (mN) | 1.3 | 0.1 | 0.5 | 1.8 | 1.4 | 0.1 | 0.5 | 0.8 | 0.2 | 0.6 | 0.3 | 0.6 |

Therefore, with reference to Table 4, it can be ascertained that in Case 3 in which the first reinforcement plate 521 of the second speaker module 520 is the second shield member 510, the first magnet M1 is the single-pole magnet, and the second to fourth magnets M2, M3, and M4 are the multi-pole magnet and Case 4 in which the first reinforcement plate 521 of the second speaker module 520 is the second shield member 510, the first magnet M1 and the fourth magnet M4 are the single-pole magnet, and the second magnet M2 and the third magnet M3 are the multi-pole magnet, the error rates of the AF actuator 340, the first OIS actuator 350, and the second OIS actuator 360 are low, and the EM forces of the AF actuator 340, the first OIS actuator 350, and the second OIS actuator 360 are low, in comparison with Cases 1 and 2. An electronic device 101 or 200 according to an embodiment disclosed in the present document may include: a first housing 210; a second housing 220 rotatably connected to the first housing 210 based on a folding axis F; a first camera device 310 disposed in the first housing 210; a first magnet M1 disposed in the first housing 210 and at least partially spaced apart from the first camera device 310; and a second magnet M2 disposed in the second housing 220 and configured to at least partially face the first magnet M1 in a folded state of the electronic device, in which the first camera device includes: a lens assembly 330; an AF actuator 340 configured to at least partially face the first magnet M1 and move the lens assembly 330 in an optical axis direction; a first shield member 370 disposed between the first magnet M1 and the AF actuator 340 and configured to cover at least a part of the AF actuator 340; a first OIS actuator 350 configured to move the lens assembly 330 in a first axis direction perpendicular to the optical axis; and a second OIS actuator 360 configured to move the lens assembly 330 in a second axis direction perpendicular to the first axis.

In addition, the electronic device may further include: a second camera device 410 disposed between the first magnet M1 and the first camera device 310 in the first housing 210, in which the first camera device 310 is spaced apart from the first magnet M1 in a first direction, and in which the second camera device 410 is disposed in a second direction opposite to the first direction with respect to the first camera device 310.

In addition, the first camera device 310 may include a camera housing configured to accommodate the lens assembly 330 and comprising a first portion 321 at least partially facing the first magnet M1, a second portion 322 facing the first portion 321, a third portion 323 extending in a direction perpendicular to the first portion and second portion, and a fourth portion 324 facing the third portion 323, the AF actuator 340 is disposed in the first portion 321, the first OIS actuator 350 is disposed in the second portion 322, and the second OIS actuator 360 is disposed in either the third portion 323 or the fourth portion 324.

In addition, the first camera device 310 may include a camera housing configured to accommodate the lens assembly 330 and comprising a first portion 321 at least partially facing the first magnet M1, a second portion 322 facing the first portion 321, a third portion 323 extending in a direction perpendicular to the first portion and second portion, and a fourth portion 324 facing the third portion 323, the AF actuator 340 is disposed in the first portion 321, the first OIS actuator 350 is disposed in the third portion 322, and the second OIS actuator 360 is disposed in the fourth portion 324.

In addition, first magnet M1 may be a single-pole magnet comprising a single N-pole and a single S-pole, and the second magnet M2 may be a multi-pole magnet comprising at least two N-poles and at least two S-poles.

In addition, the electronic device may further include a third magnet M3 disposed in the first housing 210 and at least partially disposed in a third direction perpendicular to the first direction with respect to the first magnet M1; and a fourth magnet M4 disposed in the second housing 220, disposed in the third direction with respect to the second magnet M2, and configured to at least partially face the third magnet M3 in the folded state of the electronic device 101, 200.

In addition, the third magnet M3 is a multi-pole magnet comprising at least two N-poles and at least two S-poles, and the fourth magnet M2 is a single N-pole and a single S-pole.

In addition, the electronic device may further include a second camera device 410 disposed between the first magnet M1 and the first camera device 310 in the first housing 210, the first camera device 310 is spaced apart from the first magnet M1 in a third direction, and the second camera device 410 is disposed in a fourth direction opposite to the third direction with respect to the first camera device 310.

In addition, the first camera device 310 may include a camera housing configured to accommodate the lens assembly 330 and comprising a first portion 321 at least partially facing the first magnet M1, a second portion 322 facing the first portion 321, a third portion 323 extending in a direction perpendicular to the first portion and second portion, and a fourth portion 324 facing the third portion 323, the AF actuator 340 is disposed in the first portion 321, the first OIS actuator 350 is disposed in one of the second portion 322, the third portion 323, and the fourth portion 324, and the second OIS actuator 360 is disposed in another of the second portion 322, the third portion 323, and the fourth portion 324.

In, addition, the electronic device may further include a flexible display 230 disposed on the first housing 210 and the second housing 220 and configured to be at least partially bent as the electronic device 101, 200 is folded or unfolded; an electronic component disposed in the second housing 220 in the first direction with respect to the second magnet M2, and configured to at least partially face the first camera device 310 in the folded state of the electronic device 101, 200; and a second shield member 510 disposed in any one of a portion between the first camera device 310 and the flexible display 230 and a portion between the electronic component and the flexible display 230 so that the second shield member 510 is positioned between the first camera device 310 and the electronic component in the folded state of the electronic device 101, 200.

In, addition, the electronic device may further include a reinforcement plate 521 configured to cover the electronic component, the second shield member is the reinforcement plate.

An electronic device 101 or 200 according to an embodiment disclosed in the present document may include: a first housing 210; a second housing 220 rotatably connected to the first housing 210 based on a folding axis F; a first camera device 310 disposed in the first housing 210; a first magnet M1 disposed in the first housing 210 and at least partially spaced apart from the first camera device 310 ; and a second magnet M2 disposed in the second housing 220 and configured to at least partially face the first magnet M1 in a folded state of the electronic device 100, 201, in which the first camera device 310 includes: a lens assembly 330; a camera housing 320 comprising a first portion 321 configured to accommodate the lens assembly 330 and at least partially face the first magnet M1, a second portion 322 opposite to the first portion 321, a third portion 323 configured to face a lateral member of the first housing 210, and a fourth portion 324 opposite to the third portion 323; an AF actuator 340 configured to move the lens assembly 330 in an optical axis direction and positioned on any one of the second portion 322, the third portion 323, and the fourth portion 324 of the camera housing 320; a first shield member 370 disposed to cover at least a part of the AF actuator 340; a first OIS actuator 350 configured to move the lens assembly 330 in a first axis direction perpendicular to the optical axis, the first OIS actuator 350 being positioned on one remaining portion among the second portion 322, the third portion 323, and the fourth portion 324 of the camera housing 320; and a second OIS actuator 360 configured to move the lens assembly 330 in a second axis direction perpendicular to the first axis, the second OIS actuator 360 being positioned on another remaining portion among the second portion 322, the third portion 323, and the fourth portion 324 of the camera housing 320.

In addition the electronic device may further include: a second camera device 410 disposed between the first magnet M1 and the first camera device 310 in the first housing 210, the first camera device 310 is spaced apart from the first magnet M1 in a first direction, and the second camera device 410 is disposed in a second direction opposite to the first direction with respect to the first camera device 310.

In addition the electronic device may further include: a second camera device 410 disposed between the first magnet M1 and the first camera device 310 in the first housing 210, the first camera device 310 is spaced apart from the first magnet M1 in a third direction, and the second camera device 410 is disposed in a fourth direction opposite to the third direction with respect to the first camera device 310.

In addition the first magnet M1 may be a single-pole magnet comprising a single N-pole and a single S-pole, and the second magnet M2 is a multi-pole magnet comprising at least two N-poles and at least two S-poles.

In addition the electronic device may further include: a third magnet M3 disposed in the first housing 210 and at least partially disposed in a third direction with respect to the first magnet M1; and a fourth magnet M4 disposed in the second housing 220, disposed in the third direction with respect to the second magnet M2, and configured to at least partially face the third magnet M3 in the folded state of the electronic device 101, 200.

In addition the third magnet M3 is a multi-pole magnet comprising at least two N-poles and at least two S-poles, and the fourth magnet M2 is a single N-pole and a single S-pole.

In addition the electronic device may further include: a flexible display 230 disposed on the first housing 210 and the second housing 220 and configured to be at least partially bent as the electronic device 101, 200 is folded or unfolded; an electronic component provided in the second housing 220, disposed in the second direction with respect to the second magnet M2, and configured to at least partially face the first camera device 310 in the folded state of the electronic device 101, 200; and a second shield member 510 disposed in any one of a portion between the first camera device 310 and the flexible display 230 and a portion between the electronic component and the flexible display 230 so that the second shield member 510 is positioned between the first camera device 310 and the electronic component in the folded state of the electronic device 101, 200.

In addition, the electronic component is a speaker module 520.

In addition the electronic device may further include: a reinforcement plate 521 configured to cover the electronic component, the second shield member is the reinforcement plate.

The electronic device according to various embodiments disclosed in the present document may be a device in various forms. The electronic device may include, for example, a portable communication device (e.g., a smartphone), a computer device, a portable multimedia device, a portable medical device, a camera, a wearable device, or a home appliance. The electronic device according to the embodiment of the present document is not limited to the above-mentioned devices.

Various embodiments of the present document and the terms used in the embodiments are not intended to limit the technical features disclosed in the present document to the particular embodiments and should be understood as including various alterations, equivalents, or alternatives of the corresponding embodiments. In connection with the description of the drawings, the same or similar reference numerals may be used for the similar components. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The term "module" used in various embodiments of the present document may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to the embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to the embodiment, a method according to various embodiments disclosed in the present document may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each constituent element (e.g., module or program), among the above-mentioned constituent elements, may include a single object or a plurality of objects, and some of the plurality of objects may be disposed separately in different constituent elements. According to various embodiments, one or more constituent elements, among the above-mentioned constituent elements, or operations may be omitted, or one or more other constituent elements or operations may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be understood that in addition to the above-disclosed embodiments, embodiments based on any two or more combinations of the above-disclosed embodiments and embodiments including any combination of the above features are also contemplated and included herein. The present specification is disclosed. That is, the absence of an explicit indication that two features may be combined or two embodiments may be combined does not mean that such combinations are not envisioned, but rather that such combinations are to be considered as being included herein.

## Claims

1. An electronic device (101, 200) comprising:
a first housing (210);
a second housing (220) rotatably connected to the first housing (210) based on a folding axis (F);
a first camera device (310) disposed in the first housing (210);
a first magnet (M1) disposed in the first housing (210) and spaced apart from the first camera device (310); and
a second magnet (M2) disposed in the second housing (220) and configured to at least partially face the first magnet (M1) in a folded state of the electronic device,
wherein the first camera device (310) comprises:
a lens assembly (330);
an AF actuator (340) configured to at least partially face the first magnet (M1) and move the lens assembly (330) in an optical axis direction;
a first shield member (370) disposed between the first magnet (M1) and the AF actuator (340) and configured to cover at least a part of the AF actuator (340);
a first OIS actuator (350) configured to move the lens assembly (330) in a first axis direction perpendicular to the optical axis; and
a second OIS actuator (360) configured to move the lens assembly (330) in a second axis direction perpendicular to the first axis.

2. The electronic device (101, 200) of claim 1, further comprising:
a second camera device (410) disposed between the first magnet (M1) and the first camera device (310) in the first housing (210),
wherein the first camera device (310) is spaced apart from the first magnet (M1) in a first direction, and
wherein the second camera device (410) is disposed in a second direction opposite to the first direction with respect to the first camera device (310).

3. The electronic device (101, 200) of claim 1 or 2, wherein the first camera device (310) comprises a camera housing configured to accommodate the lens assembly (330) and comprising a first portion (321) at least partially facing the first magnet (M1), a second portion (322) facing the first portion (321), a third portion (323) extending in a direction perpendicular to the first portion and second portion, and a fourth portion (324) facing the third portion (323),
wherein the AF actuator (340) is disposed in the first portion (321),
wherein the first OIS actuator (350) is disposed in one of the second portion (322), the third portion (323), and the fourth portion (324), and
wherein the second OIS actuator (360) is disposed in another of the second portion (322), the third portion (323), and the fourth portion (324).

4. The electronic device (101, 200) of any of claim 1 to 3, wherein the first magnet (M1) is a single-pole magnet comprising a single N-pole and a single S-pole, and
wherein the second magnet (M2) is a multi-pole magnet comprising at least two N-poles and at least two S-poles.

5. The electronic device (101, 200) of any of claims 1 to 6, further comprising:
a third magnet (M3) disposed in the first housing (210) and at least partially disposed in a third direction perpendicular to the first direction with respect to the first magnet (M1); and
a fourth magnet (M4) disposed in the second housing (220), disposed in the third direction with respect to the second magnet (M2), and configured to at least partially face the third magnet (M3) in the folded state of the electronic device (101, 200).

6. The electronic device (101, 200) of claim 5, wherein the third magnet (M3) is a multi-pole magnet comprising at least two N-poles and at least two S-poles, and
wherein the fourth magnet (M2) is a single N-pole and a single S-pole.

7. The electronic device (101, 200) of claim 1, further comprising:
a second camera device (410) disposed between the first magnet (M1) and the first camera device (310) in the first housing (210),
wherein the first camera device (310) is spaced apart from the first magnet (M1) in a third direction, and
wherein the second camera device (410) is disposed in a fourth direction opposite to the third direction with respect to the first camera device (310).

8. The electronic device (101, 200) of claim 7, wherein the first camera device (310) comprises a camera housing configured to accommodate the lens assembly (330) and comprising a first portion (321) at least partially facing the first magnet (M1), a second portion (322) facing the first portion (321), a third portion (323) extending in a direction perpendicular to the first portion and second portion, and a fourth portion (324) facing the third portion (323),
wherein the AF actuator (340) is disposed in the first portion (321),
wherein the first OIS actuator (350) is disposed in one of the second portion (322), the third portion (323), and the fourth portion (324), and
wherein the second OIS actuator (360) is disposed in another of the second portion (322), the third portion (323), and the fourth portion (324).

9. The electronic device (101, 200) of any of claims 1 to 8, further comprising:
a flexible display (230) disposed on the first housing (210) and the second housing (220) and configured to be at least partially bent as the electronic device (101, 200) is folded or unfolded;
an electronic component disposed in the second housing (220) in the first direction with respect to the second magnet (M2), and configured to at least partially face the first camera device (310) in the folded state of the electronic device (101, 200); and
a second shield member (510) disposed in any one of a portion between the first camera device (310) and the flexible display (230) and a portion between the electronic component and the flexible display (230) so that the second shield member (510) is positioned between the first camera device (310) and the electronic component in the folded state of the electronic device (101, 200).

10. The electronic device of claim 9, further comprising:
a reinforcement plate 521 configured to cover the electronic component,
wherein the second shield member is the reinforcement plate.

11. An electronic device (101, 200) comprising:
a first housing (210);
a second housing (220) rotatably connected to the first housing (210) based on a folding axis (F);
a first camera device (310) disposed in the first housing (210);
a first magnet (M1) disposed in the first housing (210) and at least partially spaced apart from the first camera device (310) ; and
a second magnet (M2) disposed in the second housing (220) and configured to at least partially face the first magnet (M1) in a folded state of the electronic device (100, 201),
wherein the first camera device (310) comprises:
a lens assembly (330);
a camera housing (320) comprising a first portion (321) configured to accommodate the lens assembly (330) and at least partially face the first magnet (M1), a second portion (322) opposite to the first portion (321), a third portion (323) configured to face a lateral member of the first housing (210), and a fourth portion (324) opposite to the third portion (323);
an AF actuator (340) configured to move the lens assembly (330) in an optical axis direction and positioned on any one of the second portion (322), the third portion (323), and the fourth portion (324) of the camera housing (320);
a first shield member (370) disposed to cover at least a part of the AF actuator (340);
a first OIS actuator (350) configured to move the lens assembly (330) in a first axis direction perpendicular to the optical axis, the first OIS actuator (350) being positioned on one remaining portion among the second portion (322), the third portion (323), and the fourth portion (324) of the camera housing (320); and
a second OIS actuator (360) configured to move the lens assembly (330) in a second axis direction perpendicular to the first axis, the second OIS actuator (360) being positioned on another remaining portion among the second portion (322), the third portion (323), and the fourth portion (324) of the camera housing (320).

12. The electronic device (101, 200) of claim 11, further comprising:
a second camera device (410) disposed between the first magnet (M1) and the first camera device (310) in the first housing (210),
wherein the first camera device (310) is spaced apart from the first magnet (M1) in a first direction, and
wherein the second camera device (410) is disposed in a second direction opposite to the first direction with respect to the first camera device (310).

13. The electronic device (101, 200) of claim 11, further comprising:
a second camera device (410) disposed between the first magnet (M1) and the first camera device (310) in the first housing (210),
wherein the first camera device (310) is spaced apart from the first magnet (M1) in a third direction, and
wherein the second camera device (410) is disposed in a fourth direction opposite to the third direction with respect to the first camera device (310).

14. The electronic device (101, 200) of claim 11 to 13, wherein the first magnet (M1) is a single-pole magnet comprising a single N-pole and a single S-pole, and
wherein the second magnet (M2) is a multi-pole magnet comprising at least two N-poles and at least two S-poles.

15. The electronic device (101, 200) of claim 11 further comprising:
a third magnet (M3) disposed in the first housing (210) and at least partially disposed in a third direction with respect to the first magnet (M1); and
a fourth magnet (M4) disposed in the second housing (220), disposed in the third direction with respect to the second magnet (M2), and configured to at least partially face the third magnet (M3) in the folded state of the electronic device (101, 200).
